# EUROPEAN PATENT APPLICATION

(11) **EP 4 832 526 A1**
(43) Date of publication of application: **28.10.2026**
(21) Application number: 23961990.1
(22) Date of filing: 22.12.2023
(51) Int. Cl.: H04W 8/24

(54) **INFORMATION TRANSMISSION METHOD AND APPARATUS, AND DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN); FU, Zhe, Dongguan, Guangdong 523860 (CN)
(74) Representative: Grassi, Stefano
(86) International application number: PCT/CN2023/141179
(87) International publication number: WO 2025/129668

(57) **Abstract**

Provided in the embodiments of the present application is an information transmission method, which is applied to a terminal device. The method comprises: sending to a network device communication capability information of a terminal device for a first frequency band combination, wherein the communication capability information for the first frequency band combination comprises a first communication capability for different frequency bands in the first frequency band combination, and/or a second communication capability for different frequency bands in different frequency band sub-combinations, the different frequency band sub-combinations being included in the first frequency band combination; and the first communication capability of the terminal device on the frequency bands is unrelated to a frequency band combination mode, and the second communication capability of the terminal device on the frequency bands is related to the frequency band combination mode. The terminal device reports the first communication capability for different frequency bands in the first frequency band combination, and thus signaling overheads can be saved on; and the terminal device reports the second communication capability for different frequency bands in different frequency band sub-combinations in the first frequency band combination, such that the second communication capability reported by the terminal device is applicable to different frequency band sub-combinations.

## Description

### TECHNICAL FIELD

The embodiments of the present disclosure relate to the field of communication technology, and in particular to an information transmission method and device, an apparatus, a chip and a storage medium.

### BACKGROUND

In the current 5G system, when a terminal is configured with a plurality of frequency bands, and the terminal can support different frequency band combinations composed of the plurality of frequency bands in time division, the terminal may report a communication capability for each of the plurality of frequency bands, but does not consider a case where the communication capability of the terminal on each frequency band may change depending on a different (combination) mode of frequency band combinations.

For example, the terminal may be configured with frequency band#1, frequency band#2, and frequency band#3 simultaneously, and it is assumed that the terminal can support [frequency band#1, frequency band#2] (i.e., the terminal can communicate on frequency band#1 and frequency band#2 simultaneously) and [frequency band#1, frequency band#3] (i.e., the terminal can communicate on frequency band#1 and frequency band#3 simultaneously) in time division, but the terminal cannot communicate on frequency band#1, frequency band#2, and frequency band#3 simultaneously. In this scenario, the terminal will report a communication capability for each of frequency band#1, frequency band#2, and frequency band#3 but does not consider the case where the communication capability of the terminal on frequency band#1 may change as frequency band#1 is combined with frequency band#2 and frequency band#3.

As described above, the reported communication capability for a frequency band may exceed the capability range of the terminal when the frequency band is combined with different frequency bands, or the maximum capability of the terminal may not be fully reflected.

### SUMMARY

The embodiments of the present disclosure provide an information transmission method and device, an apparatus, a chip, and a storage medium.

A first aspect of the embodiments of the present disclosure provides an information transmission method applied to a terminal device, and the method includes operations as follows. Communication capability information for a first frequency band combination of the terminal device is sent to a network device. The communication capability information for the first frequency band combination includes: first communication capabilities on different frequency bands in the first frequency band combination; and/or, second communication capabilities on different frequency bands in the different frequency band subcombinations. The different frequency band subcombinations are included in the first frequency band combination. The first communication capability of the terminal device on the frequency band is not related to a frequency band combination mode, and the second communication capability of the terminal device on the frequency band is related to the frequency band combination mode.

A second aspect of the embodiments of the present disclosure provides an information transmission method applied to a network device, and the method includes operations as follows. Communication capability information for a first frequency band combination from the terminal device is received by a network device. The communication capability information for the first frequency band combination includes: first communication capabilities on different frequency bands in the first frequency band combination; and/or, second communication capabilities on different frequency bands in the different frequency band subcombinations. The different frequency band subcombinations are included in the first frequency band combination. The first communication capability of the terminal device on the frequency band is not related to a frequency band combination mode, and the second communication capability of the terminal device on the frequency band is related to the frequency band combination mode.

A third aspect of the embodiments of the present disclosure provides an information transmission method applied to a terminal device, and the method includes operations as follows. Communication capability information of the terminal device for a first frequency band combination is sent to a network device, and the communication capability information includes: a sum of first communication capabilities of the terminal device on a plurality of frequency bands included in the first frequency band combination; and/or a common value of second communication capabilities of the terminal device on a plurality of frequency bands included in the first frequency band combination.

A fourth aspect of the embodiments of the present disclosure provides an information transmission method which includes operations as follows. Communication capability information for a first frequency band combination from the terminal device is received, and the communication capability information includes: a sum of first communication capabilities of the terminal device on a plurality of frequency bands included in the first frequency band combination; and/or a common value of second communication capabilities of the terminal device on a plurality of frequency bands included in the first frequency band combination.

A fifth aspect of the embodiments of the present disclosure provides an information transmission device including a first sending configured to send communication capability information for a first frequency band combination of the device to a network device. The communication capability information for the first frequency band combination includes: first communication capabilities on different frequency bands in the first frequency band combination; and/or, second communication capabilities on different frequency bands in the different frequency band subcombinations. The different frequency band subcombinations are included in the first frequency band combination. The first communication capability of the device on the frequency band is not related to a frequency band combination mode, and the second communication capability of the device on the frequency band is related to the frequency band combination mode.

A sixth aspect of the embodiments of the present disclosure provides an information transmission device including a first receiving unit configured to receive communication capability information for a first frequency band combination from the terminal device. The communication capability information for the first frequency band combination includes: first communication capabilities on different frequency bands in the first frequency band combination; and/or, second communication capabilities on different frequency bands in the different frequency band subcombinations. The different frequency band subcombinations are included in the first frequency band combination. The first communication capability of the terminal device on the frequency band is not related to a frequency band combination mode, and the second communication capability of the terminal device on the frequency band is related to the frequency band combination mode.

A seventh aspect of the embodiments of the present disclosure provides an information transmission device including a second sending unit configured to send communication capability information for a first frequency band combination of the device to a network device, and the communication capability information includes: a sum of first communication capabilities of the device on a plurality of frequency bands included in the first frequency band combination; and/or a common value of second communication capabilities of the device on a plurality of frequency bands included in the first frequency band combination.

An eighth aspect of the embodiments of the present disclosure provides an information transmission device including a second receiving unit configured to receive communication capability information for a first frequency band combination from the terminal device, and the communication capability information includes: a sum of first communication capabilities of the terminal device on a plurality of frequency bands included in the first frequency band combination; and/or a common value of second communication capabilities of the terminal device on a plurality of frequency bands included in the first frequency band combination.

A ninth aspect of the embodiments of the present disclosure provides a communication device, including: a memory for storing a computer program; a processor connected to the memory for invoking and executing the computer program from the memory to implement the method of any one of the first to fourth aspects. The transceiver is configured for receiving and sending signals in the process of sending and receiving information with other devices.

A tenth aspect of the embodiments of the present disclosure provides a chip. The chip includes: a processor configured for invoking and executing a computer program from a memory, causing a device on which the chip is mounted to perform the method of any one of the first to fourth aspects; and a transceiver configured for receiving and transmitting signals in the process of sending and receiving information with a device or a chip.

An eleventh aspect of the embodiments of the present disclosure provides a computer-readable storage medium for storing a computer program that causes a computer to perform the method according to any one of the first to fourth aspects.

A twelfth aspect of the embodiments of the present disclosure provides a computer program product including computer program instructions that cause a computer to perform the method according to any one of the first to fourth aspects.

A thirteenth aspect of the embodiments of the present disclosure provides a computer program that, when executed on a computer, causes the computer to perform the method according to any one of the first to fourth aspects.

With the above technical solution, the terminal may send (report) communication capability information for the first frequency band combination to the network device, and the communication capability information for the first frequency band combination may include: first communication capabilities on different frequency bands in the first frequency band combination; and/or, second communication capabilities on different frequency bands in the different frequency band subcombinations. The different frequency band subcombinations are included in the first frequency band combination. The first communication capability of the terminal device on the frequency band is not related to a frequency band combination mode, and the second communication capability of the terminal device on the frequency band is related to the frequency band combination mode. Since the first communication capability of the terminal device on the frequency band is not related to the frequency band combination mode, it indicates the first communication capability of the terminal device on different frequency bands does not change with the different frequency band combination mode, and the terminal device can report the first communication capabilities on different frequency bands in the first frequency band combination respectively, to save signaling overhead. The second communication capability of the terminal device on the frequency band is related to the frequency band combination mode, it indicates that the second communication capabilities of the terminal device on different frequency bands may change as different frequency band combination modes. Therefore, the terminal device can report the second communication capabilities on different frequency bands in different frequency band sub-combinations in the first frequency band combination, so as to avoid the second communication capability on a frequency band exceeding the capability range of the terminal device as the frequency band combination (sub-combination) changes, so that the second communication capability reported by the terminal device can adapt to different frequency band sub-combinations, thereby fully reflecting the communication capability of the terminal device.

### BRIEF DESCRIPTION OF THE DRAWINGS

The accompanying drawings described herein are used to provide a further understanding of the present disclosure and constitute a part of the present disclosure. The schematic embodiments of the present disclosure and the description thereof are used to explain the present disclosure and do not constitute an improper limitation of the present disclosure. In the drawings:
FIG. 1 is a schematic diagram of an application scenario according to an embodiment of the present disclosure;
FIG. 2 is a schematic configuration diagram of an EN-DC radio bearer provided by an embodiment of the present disclosure;
FIG. 3 is a schematic diagram of an example of a relationship among a cell carrier bandwidth, a single carrier terminal bandwidth capability, and a BWP provided by an embodiment of the present disclosure;
FIG. 4 is a schematic flowchart of an information transmission method provided by an embodiment of the present disclosure;
FIG. 5 is a schematic flowchart 2 of an information transmission method provided by an embodiment of the present disclosure;
FIG. 6 is a schematic structural diagram of a composition of an information transmission device provided by an embodiment of the present disclosure;
FIG. 7 is a schematic structural diagram 2 of a composition of the information transmission device provided by the embodiment of the present disclosure;
FIG. 8 is a schematic structural diagram 3 of a composition of an information transmission device provided by an embodiment of the present disclosure;
FIG. 9 is a schematic structural diagram 4 of a composition of an information transmission device provided by an embodiment of the present disclosure;
FIG. 10 is a schematic structural diagram of a communication device provided by an embodiment of the present disclosure;
FIG. 11 is a schematic structural diagram of a chip according to an embodiment of the present disclosure; and
FIG. 12 is a schematic block diagram of a communication system provided by an embodiment of the present disclosure.

### DETAILED DESCRIPTION

The technical solutions in the embodiments of the present disclosure will be described below with reference to the accompanying drawings in the embodiments of the present disclosure. Apparently, the described embodiments are a part of the embodiments of the present disclosure, rather than all embodiments. Based on the embodiments in the present disclosure, all other embodiments obtained by those of ordinary skill in the art without making creative efforts fall within the scope of protection of the present disclosure.

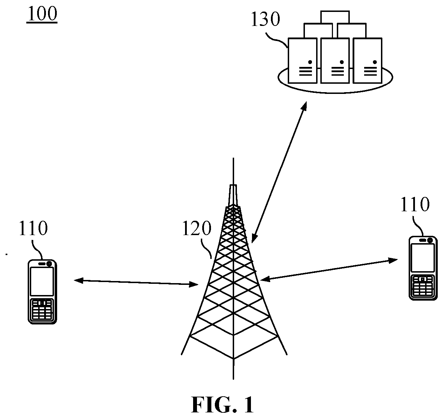

FIG. 1 is a schematic diagram of an application scenario according to an embodiment of the present disclosure.

As shown in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the communication system 100 is illustrative in the embodiments of the present disclosure, but the embodiments of the present disclosure are not limited thereto. That is, the technical solution of the embodiment of the present disclosure can be applied to various communication systems, for example, a long-term Evolution (LTE) System, an LTE Time Division Duplex (TDD), a Universal Mobile Telecommunication System (UMTS), an Internet of Things (IoT) System, and a Narrow Band Internet of Things (NB-IoT) System, an enhanced Machine-Type Communications (eMTC) system, the 5G communication system (also known as New Radio (NR) communication system), the 6G communication system, or the future communication systems, etc.

In the communication system 100 illustrated in FIG. 1, the network device 120 may be an access network device that communicates with the terminal device 110. The access network device may provide communication coverage for a particular geographic area and may communicate with a terminal device 110 (e.g., a UE) located within the coverage area.

The Network device 120 may be an Evolutionary Node B (eNB or eNodeB) in the Long Term Evolution (LTE) system, or a Next Generation Radio Access Network (NG RAN) device, or a base station (gNB) in the NR system, or a base station in the 6G system, or a wireless controller in the Cloud Radio Access Network (CRAN), or the Network device 120 may be a relay station, an Access point, an in-vehicle device, a wearable device, a hub, a switch, a bridge, a router, or a Network device in a future evolutionary Public Land Mobile Network (PLMN).

The terminal device 110 may be any terminal device including, but not limited to, a terminal device connected in a wired or wireless manner with the network device 120 or other terminal devices.

For example, the terminal device 110 may refer to an access terminal, a User Equipment (UE), a User unit, a User station, a mobile platform, a mobile station, a remote station, a remote terminal, a mobile device, a User terminal, a terminal, a wireless communication device, a User agent, or a User device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having Wireless communication capabilities, a computing device or other processing device connected to a Wireless modem, an in-vehicle device, a wearable device, a terminal device in the 5G network, a terminal device in the 6G network, or a terminal device in a future evolution network, or the like.

The terminal device 110 may be used for device-to-device (D2D) communication.

The communication system 100 may further include a Core network device 130 that communicates with the network device 120, and the Core network device 130 may be a 5G Core network (5G Core, 5G GC) device, for example, an Access and Mobility Management Function (AMF), for example, an Authentication Server Function (AUSF), for example, a User Plane Function (UPF), for example, a Session Management Function (SMF). In some embodiments, the Core network device 130 may also be an Evolved Packet Core (EPC) device of the LTE network, e.g., a Session Management Function + Core Packet Gateway (SMF + PGW-C) device. It should be understood that SMF + PGW-C can simultaneously implement the functions that SMF and PGW-C. In the process of network evolution, the above-mentioned core network device may also be called by other names, or a new network entity may be formed by dividing the functions of the core network, which is not limited by the embodiment of the present disclosure.

The various functional units in the communication system 100 may also establish connections through the next generation (NG) interface to enable communication.

For example, the terminal device establishes an air interface connection with the access network device through the NR interface for transmitting user plane data and control plane signaling. The terminal device can establish a control plane signaling connection with the AMF through the NG interface 1 (N1 for short). An access network device, such as a next generation radio access base station (gNB), can establish a user plane data connection with the UPF through the NG interface 3 (N3 for short). The access network device can establish a control plane signaling connection with the AMF through the NG interface 2 (N2 for short). The UPF can establish a control plane signaling connection with the SMF through the NG interface 4 (N4 for short). The UPF can interact user plane data with the data network through the NG interface 6 (N6 for short). The AMF may establish a control plane signaling connection with the SMF through the NG interface 11 (N11 for short). The SMF may establish a control plane signaling connection with the PCF through the NG interface 7 (N7 for short).

FIG. 1 illustrates exemplarily one network device, one core network device, and two terminal devices. Optionally, the communication system 100 may include a plurality of network devices, and the coverage range of each network device may include other number of terminal devices, which is not limited in the embodiment of the present disclosure.

It should be noted that FIG. 1 merely illustrates a system to which the present disclosure is applicable in the form of an example, and of course, the method illustrated in the embodiment of the present disclosure may be applicable to other systems. Furthermore, the terms "system" and "network" are often used interchangeably herein. The term "and/or" herein is merely an association relationship that describes associated objects, and indicates that there may be three relationships, for example, A and/or B may indicate that A exists alone, A and B exists simultaneously, and B exists alone. In addition, the character "/" herein generally indicates that the associated objects before and after are in an "or" relationship. It should also be understood that the "indication" referred to in the embodiments of the present disclosure may be a direct indication, an indirect indication, or an indication that there is an association relationship. For example, A indicates B, which may mean that A directly indicates B, e.g., B may be acquired by A; may also be indicated that A indirectly indicates B, for example, A indicates C, and B can be acquired by C; may also be indicated that there is an association relationship between A and B. It should also be understood that the "correspondence" mentioned in the embodiment of the present disclosure may mean that there is a direct correspondence or an indirect correspondence between the two objects, or may mean that there is an association relationship between the two objects, or may be a relationship between indicating and being indicated, configuring and being configured, or the like. It should also be understood that the "predefined" or "predefined rules" mentioned in the embodiments of the present disclosure can be realized by storing corresponding codes, tables, or other means that can be used to indicate relevant information in advance in devices (for example, including terminal devices and network devices), and the specific implementation method thereof is not limited in the present disclosure. For example, predefined may refer to defining in a protocol. It should also be understood that in the embodiment of the present disclosure, the "protocol" may refer to a standard protocol in the communication field, and may include, for example, an LTE protocol, an NR protocol, and related protocols applied to future communication systems, which is not limited in the present disclosure.

In order to facilitate understanding of the technical scheme of the embodiments of the present disclosure, the related technologies of the embodiment of the present disclosure will be described below, and the following related technologies can be, as optional schemes, arbitrarily combined with the technical solutions of the embodiments of the present disclosure, and all of them belong to the protection scope of the embodiment of the present disclosure.

### 1. Protocol stack architecture

In the 5G system, with dual connection architecture, the protocol stacks of user plane and control plane are relatively complicated.

Under the dual connection architecture, a network Node is composed of two nodes, which are a Master Node (MN) and a Secondary Node (SN). The packet Data Convergence Protocol (PDCP) stack and the Service Data Adaptation Protocol (SDAP) stack, and the Protocol stack (i.e. Radio Link Control (RLC), Media Access Control (MAC) and Physical Layer (PHY)) below the PDCP may be located in different network nodes. There is no distinction for different nodes in the terminal, but it is necessary to distinguish between the Master Cell Group (MCG) and the Secondary Cell Group (SCG) due to the role of Cell Group. The difference between the MCG and the SCG comes from the difference in the protocol layers (i.e., MAC and PHY) in which different radio bearers converge.

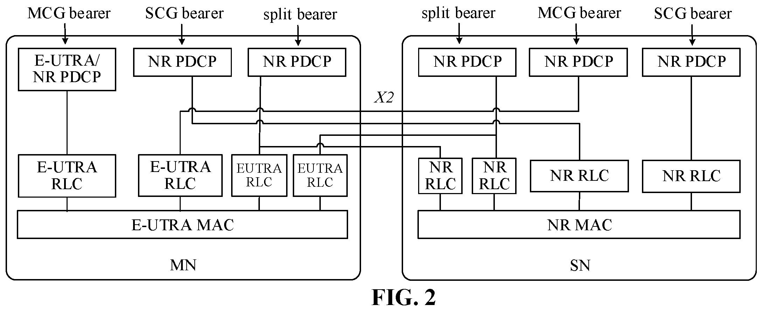

For the new air interface Dual Connectivity (EN-DC), the configuration of the radio bearer is shown in FIG. 2 from the network side. When the RLC, MAC, and PHY protocol stacks of a radio Bearer are located in the MN, such a radio Bearer is called an MCG Bearer, and otherwise, the radio bearer is called an SCG Bearer. The split bearer has radio links on both the MN and SN, but only one PDCP protocol stack. The PDCP protocol stack may be on the MN or on the SN. The purpose of split the bearer is to increase the traffic of the wireless interface.

### 2. Carrier aggregation

One or more cells may be supported in each cell group, to support Carrier Aggregation (CA) functions. In Carrier aggregation, two or more Component carriers (CC) are aggregated together. A terminal (UE) may receive or transmit simultaneously on one or more CCs according to its own capabilities.

A UE with CA single Timing Advance (TA) capability may simultaneously receive and/or transmit on multiple CCs corresponding to multiple serving cells (multiple serving cells are grouped into one TA group (TAG)) sharing the same Timing Advance. A UE having a CA multiple timing advance capability may simultaneously receive and/or transmit different timing advances on a plurality of CCs corresponding to a plurality of serving cells (the plurality of serving cells are grouped in a plurality of TAGs).

The maximum number of CCs configured by the UE is: 16 Downlink (DL) CCs and 16 Uplink (UL) CCs.

### 3. Band Width Part (BWP)

From the perspective of energy saving in frequency domain, the 5G introduces the function of BWP. The carrier bandwidth of NR is much larger than that of LTE, and many core frequency bands can support the typical 100MHz carrier bandwidth. The large bandwidth has the advantage of a high transmission rate. However, if the service mode is small data volume transmission, or if the service is discontinuous, it is very uneconomical for the UE to operate in the large bandwidth mode. The core of BWP is to define a bandwidth that is smaller than the carrier bandwidth of the cell and the bandwidth of the terminal. When the amount of data transmitted by the air interface is relatively low, the terminal performs transmission and reception in a smaller bandwidth under the dynamic configuration of the network side. In this way, the RF front-end devices, RF transceivers and baseband signal processing modules of the terminal can all operate in a smaller processing bandwidth and lower processing clock, and thus operate in a lower power consumption state.

The core concept of BWP is to define an access bandwidth that is smaller than the system bandwidth of the cell and the bandwidth capacity of the terminal. All transmission and reception operations of the terminal can be carried out within this smaller bandwidth, to realize more flexible, more efficient and lower power consumption terminal operations in the 5G large bandwidth system. The maximum single carrier system bandwidth of the LTE is 20MHz, and the single carrier bandwidth capability of the terminal is also 20MHz. Therefore, there is no case where the terminal capability is less than the cell system bandwidth. In 5G NR system, the maximum carrier bandwidth is greatly increased (such as 400MHz), while the improvement of terminal bandwidth capability apparently can't keep up with the network side (such as 100MHz). In addition, the terminal does not always need to operate at the maximum bandwidth capacity, and can operate at a smaller bandwidth, that is, BWP, in order to save power consumption and more efficient frequency domain operation.

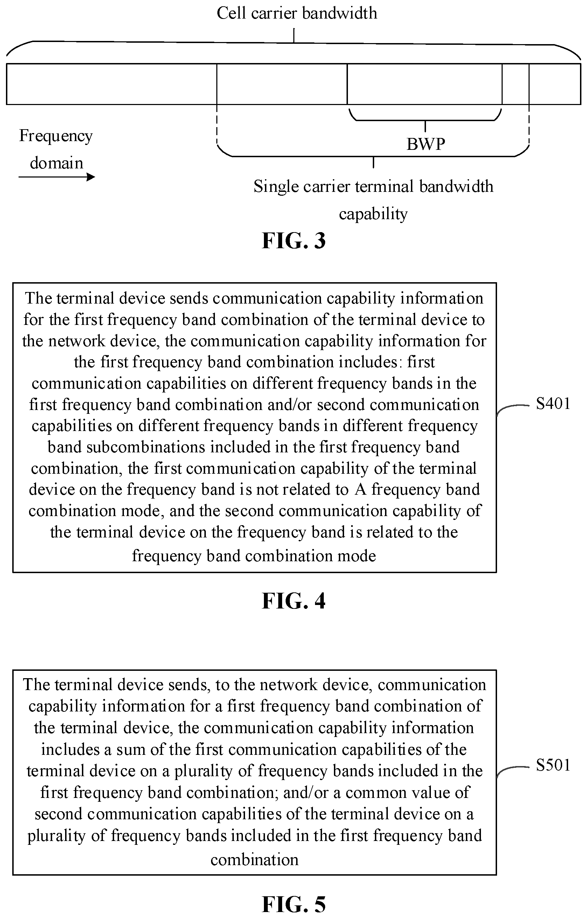

The concepts of cell group-cell and carrier-BWP are supported hierarchically in the NR system. The relationship among the cell carrier bandwidth, the single carrier terminal bandwidth capability, and the BWP is shown in FIG. 3.

The related techniques/terms related to the present disclosure have been briefly described above, and will not be described again in the following embodiments.

When the number of carriers to be aggregated increases, the number of cells to be aggregated increases since the concept of "cell" is currently used to support different carriers. In the current system design, relatively independent resources need to be consumed in order to support one cell. For example, different cells need to independently define Synchronization Signal Blocks (SSBs) and reference Signals, different cells will occupy different Hybrid Automatic Repeat reQuest (HARQ) caches, and different cells need independent control channel resources, etc. In other words, an independent parameter need to be configured for each cell, and different parameters correspond to relatively independent resource consumption.

Therefore, the concept of a cell may be further extended, and the cell may not only cover only in-band continuous frequency resources, but also cover in-band discontinuous and cross-band frequency resources, to avoid the number of cells from rising linearly with the aggregated frequency resources, thereby reducing or removing the concept of a cell group in an NR system. That is, multiple legacy carriers may be aggregated in the cell. However, on the other hand, since the terminal reports capability (communication capability), an increase in the number of aggregated frequency resources causes a further increase in the overhead of signaling for reporting terminal capability, which is not linear.

Terminal capabilities can be discussed in the following two situations:
Case 1: The terminal simultaneously uses the aggregated frequency resources.
Case 2: The terminal uses the aggregated frequency resources in time division.

In Case 1, in the current signaling architecture, a large number of terminal capabilities are reported for each band/component carrier, and each band Combination (BC) (per-band/CC-per-BC), which consume a large amount of signaling overhead. In Case 2, the design difficulty lies in not only ensuring that the frequency resources used by the terminal in time division do not exceed the capability range of the terminal, but also ensuring that the maximum capability of the terminal is fully reflected. In the current signaling structure, the related design is simplified, that is, it is assumed that the terminal can use one dual Tx chain frequency band or two single Tx chain frequency bands at the same time, and the reported per-band-per-BC capability does not vary depending on the combined frequency band or the number of Tx chains used.

Based on this assumption, when a terminal is configured with multiple frequency bands at the same time in the current 5G system, and the terminal can support different frequency band combinations composed of the plurality of frequency bands in time division, the terminal may report a communication capability on each of the plurality of frequency bands, but does not consider a case where the communication capability of the terminal on each frequency band may change depending on a different (combination) mode of frequency band combinations.

For example, the terminal may be configured with frequency band#1, frequency band#2, and frequency band#3 simultaneously, and it is assumed that the terminal can support [frequency band#1, frequency band#2] (i.e., the terminal can communicate on frequency band#1 and frequency band#2 simultaneously) and [frequency band#1, frequency band#3] (i.e., the terminal can communicate on frequency band#1 and frequency band#3 simultaneously) in time division, but the terminal cannot communicate on frequency band#1, frequency band#2, and frequency band#3 simultaneously. In this scenario, the terminal will report a communication capability on each of frequency band#1, frequency band#2, and frequency band#3 but does not consider the case where the communication capability of the terminal on frequency band#1 may change as frequency band#1 is combined with frequency band#2 and frequency band#3.

As described above, the reported communication capability on a frequency band may exceed the capability range of the terminal when the frequency band is combined with different frequency bands, or the maximum capability of the terminal may not be fully reflected.

For example, the maximum communication capability of the terminal on frequency band#1 is capability A when frequency band#1 is combined with frequency band#2, and the maximum communication capability of the terminal on frequency band 1 is capability B when frequency band#1 is combined with frequency band#3, and assuming that capability A is greater than capability B. In this way, if the capability reported by the terminal on the frequency band#1 is capability A, the communication capability on the frequency band#1 exceeds the capability range of the terminal when the frequency band#1 is combined with the frequency band#3. When the capability reported by the terminal on the frequency band#1 is the capability B, the maximum capability of the terminal cannot be sufficiently reflected in the frequency band#1 when the frequency band#1 is combined with the frequency band#2.

In view of this, the present disclosure provides an information transmission method and device, an apparatus, a chip, and a storage medium. In the method, the terminal may transmit (report) communication capability information for a first frequency band combination to the network device, and the communication capability information for the first frequency band combination may include: first communication capabilities on different frequency bands in the first frequency band combination; and/or second communication capabilities on different frequency bands in different frequency band subcombinations included in the first frequency band combination. The first communication capability of the terminal device on the frequency band is not related to a frequency band combination mode, and the second communication capability of the terminal device on the frequency band is related to the frequency band combination mode.

According to the method of the embodiment of the present disclosure, the first communication capability of the terminal device on the frequency band is not related to the frequency band combination mode, which may indicate that the first communication capabilities of the terminal device on different frequency bands does not change with the different frequency band combination mode. Therefore, the terminal device may respectively report first communication capabilities on different frequency bands in the first frequency band combination to save signaling overhead. The second communication capability of the terminal device on the frequency band is related to the frequency band combination mode, which indicates that the second communication capabilities of the terminal device on different frequency bands may change due to the different frequency band combination modes. Therefore, the terminal device can report the second communication capability on different frequency bands in different frequency band sub-combinations in the first frequency band combination, to avoid the second communication capability on a frequency band from exceeding the capability range of the terminal device as the frequency band combination (sub-combination) changes, so that the second communication capability reported by the terminal device can adapt to different frequency band sub-combinations to fully reflect the communication capability of the terminal device.

It should be understood that the "communication capability" mentioned in the embodiment of the present disclosure may also be simply referred to as "capability" in some scenarios.

In order to facilitate understanding of the technical solutions of the embodiments of the present disclosure, the technical solutions of the present disclosure are described in detail below through specific embodiments. The above related technologies can be, as optional solutions, arbitrarily combined with the technical schemes of the embodiments of the present disclosure, and all of them belong to the protection scope of the embodiments of the present disclosure. The embodiments of the present disclosure include at least some of the following.

FIG. 4 is a schematic flowchart of an information transmission method provided by an embodiment of the present disclosure. As shown in FIG. 4, the method may include the following operation S401.

At S401, the terminal device sends communication capability information for the first frequency band combination of the terminal device to the network device. The communication capability information for the first frequency band combination includes: first communication capabilities on different frequency bands in the first frequency band combination; and/or second communication capabilities on different frequency bands in different frequency band subcombinations included in the first frequency band combination. The first communication capability of the terminal device on the frequency band is not related to a frequency band combination mode, and the second communication capability of the terminal device on the frequency band is related to the frequency band combination mode.

In the present embodiment, the terminal device may transmit (report) the communication capability information for the first frequency band combination of the terminal device to the network device, and accordingly, the network device may receive the communication capability information for the first frequency band combination from the terminal device.

In some embodiments, the communication capability information for the first frequency band combination includes first communication capabilities on different frequency bands in the first frequency band combination.

For example, assuming that the first frequency band combination includes N frequency bands denoted as frequency band#1, frequency band 2,..., frequency band N, respectively, the communication capability information for the first frequency band combination may include a first communication capability on frequency band#1 (first communication capability of the terminal device on frequency band#1), a first communication capability on frequency band#2 (first communication capability of the terminal device on frequency band#2),... a first communication capability on frequency band#3 (first communication capability of the terminal device on frequency band#3).

In some embodiments, the first communication capability of the terminal device on the frequency band is not related to the frequency band combination mode, or the first communication capability of the terminal device on the frequency band does not vary depending on the frequency band combination mode. For example, assuming that a value of the first communication capability on the frequency band#1 of the terminal device is J when the frequency band#1 is combined (matched) with the frequency band#2, the value of the first communication capability for the frequency band#1 of the terminal device remains unchanged and is J when the frequency band#1 is matched with another frequency band, for example, when the frequency band#1 is matched with the frequency band#3.

Since the first communication capability of the terminal device on the frequency band is not related to the frequency band combination mode, the terminal device may respectively report the first communication capabilities on different frequency bands in the first frequency band combination without considering the combination of the respective frequency bands, thereby reducing signaling overhead.

It should be understood that the first communication capability in the present embodiment may be, for example, any communication capability not related to the frequency band combination mode, which is not limited in the embodiment of the present disclosure.

In some embodiments, the communication capability information for the first frequency band combination includes second communication capabilities on different frequency bands of different frequency band subcombinations included in the first frequency band combination.

The different frequency band sub-combination is included in the first frequency band combination, and it can also be understood that the different frequency band sub-combination is obtained by different combinations of frequency bands in the first frequency band combination.

For example, in a case where the first frequency band combination includes frequency band#1, frequency band#2, and frequency band#3, a frequency band sub-combination [frequency band#1, frequency band#2] is obtained by combining frequency band#1 and frequency band#2, and a frequency band sub-combination [frequency band#1, frequency band#3] is obtained by combining frequency band#1 and frequency band#3.

In some embodiments, the second communication capability on the frequency band of the terminal device is related to the frequency band combination mode, or the second communication capability on the frequency band of the terminal device may vary depending on the frequency band combination mode. For example, assuming that a value of the second communication capability on the frequency band#1 of the terminal device is K when the frequency band#1 is combined (matched) with the frequency band#2, the value of the second communication capability on the frequency band#1 of the terminal device may change, for example, to be K' when the frequency band#1 is matched with another frequency band, for example, when the frequency band#1 is matched with the frequency band#3,.

Since the second communication capability on a frequency band of the terminal device is related to the frequency band combination mode, in order to avoid the second communication capability on a frequency band from exceeding the capability range of the terminal device as the frequency band combination changes, and to fully reflect the maximum capability of the terminal device as much as possible, the terminal device may report the second communication capabilities on different frequency bands in different frequency band sub-combinations.

For example, assuming that different frequency band subcombinations obtained by different combinations of frequency bands in the first frequency band combination include [frequency band#1, frequency band#2] and [frequency band#1, frequency band#3], the terminal device may report the second communication capability on [frequency band#1, frequency band#2] and may report the second communication capability on [frequency band#1, frequency band#3]. As a possible implementation, when the terminal device reports the second communication capability on [frequency band#1, frequency band#2], the terminal device can report the second communication capability based on the maximum second communication capability of the terminal device when the terminal device performs communication on [frequency band#1, frequency band#2]. When the terminal device reports the second communication capability on [frequency band#1, frequency band#2], the terminal device can also report the second communication capability based on the maximum second communication capability of the terminal device when the terminal device performs communication on [frequency band#1, frequency band#3]. The terminal device may also ensure that the second communication capability on each frequency band in the frequency band sub-combination does not exceed the capability range of the terminal device.

It should be understood that the second communication capability in the present embodiment may be, for example, any communication capability related to a frequency band combination mode, which is not limited in the embodiment of the present disclosure.

In some embodiments, the communication capability information for the first frequency band combination may include both first communication capabilities on different frequency bands in the first frequency band combination and second communication capabilities on different frequency bands in different frequency band subcombinations included in the first frequency band combination.

In some embodiments, the second communication capabilities on different frequency bands in different frequency band subcombinations may include: one or more combinations of the second communication capabilities of the terminal device on respective frequency bands in the first frequency band subcombination. The first frequency band subcombination is one of different frequency band subcombinations in the first frequency band combination.

That is, for a certain frequency band subcombination (for example, the first frequency band subcombination) among the different frequency band subcombinations described above, the terminal device may carry, in the reported communication capability information, one or more combinations of the second communication capabilities of the terminal device on all the frequency bands in the frequency band subcombination.

For example, assuming that the frequency band#1 and the frequency band#2 are included in the first frequency band subcombination, the terminal device may carry, in the reported communication capability information, one or more combinations of the second communication capabilities of the terminal device on the frequency band#1 and the frequency band#2.

As an example, the terminal device may carry, in the reported communication capability information, a combination of the second communication capabilities on the frequency band#1 and the frequency band#2, for example:
[Second communication capability K1 of the terminal device on frequency band#1, second communication capability K2 of the terminal device on frequency band#2].

In another example, the terminal device may carry, in the reported communication capability information, multiple (for example, two) combinations of the second communication capabilities on the frequency band#1 and the frequency band#2, for example:
[Second communication capability K1 of the terminal device on frequency band#1, second communication capability K2 of the terminal device on frequency band#2];
[Second communication capability K3 of the terminal device on frequency band#1, second communication capability K4 of the terminal device on frequency band#2].

In some embodiments, the first frequency band subcombination may be, for example, any one of different frequency band subcombinations included in the first frequency band combination. That is, for any one of the different frequency band subcombinations, the terminal device may report one or more combinations of the second communication capabilities on all the frequency bands in the frequency band subcombination.

In some embodiments, the second communication capabilities on different frequency bands in the different frequency band subcombinations may include: a sum of the second communication capabilities of the terminal device on respective frequency bands in the first frequency band subcombination. The first frequency band subcombination is one of different frequency band subcombinations included in the first frequency band combination.

That is, for a frequency band subcombination (for example, the first frequency band subcombination) among the different frequency band subcombinations described above, the terminal device may carry, in the reported communication capability information, the sum of the second communication capabilities on the respective frequency bands in the frequency band subcombination.

For example, assuming that the frequency band#1 and the frequency band#2 are included in the first frequency band subcombination, the terminal device may carry, in the reported communication capability information, the sum of the second communication capabilities of the terminal device on the frequency band#1 and the frequency band#2 for the first frequency band subcombination.

In some embodiments, the sum of the second communication capabilities of the terminal device on frequency band#1 and frequency band#2 may be expressed, for example, as the second communication capability of the terminal device on frequency band#1+ the second communication capability of the terminal device on frequency band#2.

In some embodiments, the sum of the second communication capabilities of the terminal device on the respective frequency bands in the first frequency band subcombination is a weighted sum of the second communication capabilities of the terminal device on the respective frequency bands in the first frequency band subcombination.

For example, the sum of the second communication capabilities of the terminal device on the frequency band#1 and the frequency band#2 may be expressed as the second communication capability of the terminal device on the frequency band#1× w1+ the second communication capability of the terminal device on the frequency band#2× w2. w1 is a weight factor corresponding to frequency band#1, and w2 is a weight factor corresponding to frequency band#2.

In some embodiments, the weight factors corresponding to different frequency bands may, for example, be related to numerologies corresponding to different frequency bands. The numerology may include, for example, but is not limited to, subcarrier spacing and/or symbol length. As such, the sum of the second communication capabilities reported by the terminal device may be adapted to different numerologies.

According to the above technical solution, the terminal device may not need to report one or more combinations of the second communication capabilities of the terminal device on the frequency band#1 and the frequency band#2, thereby reducing the signaling overhead.

In some embodiments, the first frequency band subcombination may be, for example, any one of different frequency band subcombinations included in the first frequency band combination. That is, for any one of the different frequency band subcombinations, the terminal device may report the sum of the second communication capabilities on all the frequency bands in the frequency band subcombination.

In some embodiments, when the communication capability information for the first frequency band combination includes the second communication capabilities on different frequency bands in the different frequency band subcombination, the communication capability information may further include a range of the second communication capability of the terminal device on each frequency band in the first frequency band subcombination if the second communication capabilities for the different frequency band subcombinations include the sum of the second communication capabilities of the terminal device on all the frequency bands in the first frequency band subcombination.

Here, the range of the second communication capability of the terminal device on each frequency band in the first frequency band subcombination may be represented by, for example, a maximum value and a minimum value, that is, the terminal device may carry, in the communication capability information, the maximum value and the minimum value of the second communication capability of the terminal device on each frequency band in the first frequency band subcombination.

For example, assuming that the frequency band#1 and the frequency band#2 are included in the first frequency band subcombination, and if the communication capability information reported by the terminal device carries the sum of the second communication capabilities of the terminal device on the frequency band#1 and the frequency band#2, the terminal device may further carry, the communication capability information, a range (for example, the maximum value and the minimum value) of the second communication capability of the terminal device on the frequency band#1 and a range of the second communication capability of the terminal device on the frequency band#2. In some embodiments, if the range of the second communication capability of the terminal device on the frequency band#1 is the same as the range of the second communication capability of the terminal device on the frequency band#2, the terminal device may report one range of the second communication capability on the frequency band#1 and the frequency band#2 without reporting respective ranges of the second communication capability on the frequency band#1 and the frequency band#2, so as to further save signaling overhead.

In some embodiments, the terminal device cannot communicate on all frequency bands included in the first frequency band combination simultaneously.

In some embodiments, the terminal device can communicate simultaneously over multiple frequency bands included in the first frequency band subcombination, and the first frequency band subcombination is one of different frequency band subcombinations included in the first frequency band combination.

That is, the terminal device does not support simultaneous communication on all frequency bands included in the first frequency band combination, but may communicate on a plurality of frequency bands included in a frequency band subcombination (such as the first frequency band subcombination) therein.

In some embodiments, the first frequency band subcombination may be, for example, any one of different frequency band subcombinations included in the first frequency band combination. That is, the terminal device can simultaneously communicate over a plurality of frequency bands included in any one of the different frequency band subcombinations.

For example, assuming that the frequency band subcombinations included in the first frequency band combination are for example [frequency band#1, frequency band#2] and [frequency band#1, frequency band#3], it indicates that the terminal device can communicate on frequency band#1 and frequency band#2 at the same time, and can communicate on frequency band#1 and frequency band#3 at the same time. In other words, the terminal device may support [frequency band#1, frequency band#2] and [frequency band#1, frequency band#3] in time division.

According to the above technical solution, the communication capability information reported by the terminal device may carry the range of the second communication capability of the terminal device on each frequency band in the first frequency band subcombination in addition to the sum of the second communication capabilities of the terminal device on all the frequency bands in the first frequency band subcombination. In this way, after receiving the communication capability information, the network device can configure a parameter for communication of the terminal device on each frequency band in the first frequency band subcombination based on the sum of the second communication capabilities of the terminal device on all the frequency bands in the first frequency band subcombination and the range of the second communication capability of the terminal device on each frequency band in the first frequency band subcombination, so as to ensure that the values of the parameter of the terminal device on each frequency band fall within the capability range corresponding to the respective frequency band.

In some embodiments, before the terminal device transmits the communication capability information for the first frequency band combination of the terminal device to the network device, or before the network device receives the communication capability information for the first frequency band combination from the terminal device, the method may further include: sending, by the network device, indication information to the terminal device, and accordingly, receiving, by the terminal device, the indication information from the network device. The indication information may instruct the terminal device to report communication capability information of the terminal device for at least one first frequency band. The at least one first frequency band includes a frequency band in a first frequency band combination.

That is, the network device may instruct the terminal device to report the communication capability information for at least one first frequency band of the terminal device, and after the terminal device receives the indication information, the terminal device may transmit (report) the communication capability information for the first frequency band combination of the terminal device to the network device in response to the indication information if the at least one first frequency band includes a frequency band in the first frequency band combination.

In order to facilitate understanding of the embodiments of the present disclosure, possible implementations suitable for the method shown in FIG. 4 are described below with reference to examples.

For example, assuming that the terminal device is configured with the frequency band#1, the frequency band#2, and the frequency band#3 at the same time, and that the terminal device can support the [frequency band#1, the frequency band#2] (that is, the terminal device can communicate on the frequency band#1 and the frequency band#2 at the same time) and the [frequency band#1, the frequency band#3] (that is, the terminal device can communicate on the frequency band#1 and the frequency band#3 at the same time) in time division, but the terminal device cannot communicate on the frequency band#1, the frequency band#2, and the frequency band#3 at the same time. In this scenario, for the combination of the frequency band#1, the frequency band#2, and the frequency band#3 (an example of the first frequency band combination), the terminal device may report the communication capability in the following Scheme 1 and/or Scheme 2.

In scheme 1, regarding the communication capabilities (that is, the first communication capabilities) on the frequency band#1, the frequency band#2, and the frequency band#3 which do not vary depending on the combination among the frequency band#1, the frequency band#2, and the frequency band#3, the terminal device may report the communication capability on each of the frequency band#1, the frequency band#2, and the frequency band#3.

For example, since the capabilities of the Power Amplifier (PA) supported by the terminal device in the frequency band#1, the frequency band#2, and the frequency band#3 are not related to the frequency band combination mode, that is, the capability does not vary depending on the combination among the frequency band#1, the frequency band#2, and the frequency band#3, the terminal device may report the capability of the PA on each of the frequency band#1, the frequency band#2, and the frequency band#3.

In scheme 2, regarding the communication capabilities (that is, the second communication capabilities) on the frequency band#1, the frequency band#2, and the frequency band#3 which vary depending on the combination among the frequency band#1, the frequency band#2, and the frequency band#3, the terminal device may report the communication capability for each of the frequency band subcombinations supported in time division.

For example, in a case where the terminal device can support [frequency band#1, frequency band#2] and [frequency band#1, frequency band#3] in time division, the terminal device may report the communication capability for [frequency band#1, frequency band#2] and may report the communication capability for [frequency band#1, frequency band#3].

As described above, in a scenario in which the terminal device simultaneously uses the aggregated frequency resources (corresponding to the aforementioned case 1), in the current signaling structure, a large number of terminal capabilities are reported per frequency band/component carrier and per band Combination (BC) (per-band/CC-per-BC), and these capabilities consume a large amount of signaling overhead.

For example, assuming that the terminal device can support [frequency band#1, frequency band#2] at the same time, that is, the terminal can communicate on frequency band#1 and frequency band#2 at the same time, the terminal device needs to report communication capabilities on frequency band#1 and frequency band#2, respectively, and may report multiple combinations of capabilities, for example, the following combinations of capabilities:
[Communication capability A1 of the terminal device on frequency band#1, communication capability A2 of terminal device on frequency band#2]; and
[Communication Capability B1 of the terminal device on Frequency Band#1, Communication Capability B2 of the terminal device on Frequency Band#2].

The above combination of capabilities indicates that the communication capability A1 of the terminal device on the frequency band#1 may be matched with the communication capability A2 of the terminal device on the frequency band#2; and the communication capability B1 of the terminal device on the frequency band#1 may be matched with the communication capability B2 of the terminal device on the frequency band#2. It can be seen that this reporting manner needs to report the capability on different frequency bands and different capability combinations (match), and has high signaling overhead.

In view of this, the present disclosure further provides an information transmission method. In the method, the terminal device may transmit (report) communication capability information for the first frequency band combination to the network device, and the communication capability information may include: a sum of the first communication capabilities of the terminal device on a plurality of frequency bands included in the first frequency band combination; and/or a common value of second communication capabilities of the terminal device on a plurality of frequency bands included in the first frequency band combination. As such, the terminal device may not need to report the first communication capability and/or the second communication capability separately on each frequency band in the first frequency band combination, thereby reducing the signaling overhead.

FIG. 5 is a schematic flowchart of an information transmission method provided by an embodiment of the present disclosure. As shown in FIG. 5, the method may include the following operation S501.

At S501, the terminal device sends communication capability information for the first frequency band combination of the terminal device to the network device. The communication capability information includes a sum of the first communication capabilities of the terminal device on a plurality of frequency bands included in the first frequency band combination; and/or a common value of a second communication capabilities of the terminal device on a plurality of frequency bands included in the first frequency band combination.

In the embodiment, the terminal device may send (report) the communication capability information for the first frequency band combination of the terminal device to the network device, and accordingly, the network device may receive the communication capability information for the first frequency band combination from the terminal device.

In some embodiments, the communication capability information may include a sum of the first communication capabilities of the terminal device on a plurality of frequency bands included in the first frequency band combination.

As an implementation, assuming that the first frequency band combination includes N frequency bands, respectively denoted as frequency band#1, frequency band 2,..., frequency band N, the sum of the first communication capabilities of the terminal device on the N frequency bands included in the first frequency band combination can be expressed as: first communication capability of the terminal device on frequency band#1+ first communication capability of the terminal device on frequency band#2+... + first communication capability of the terminal device on frequency band#N.

As another implementation, the sum of the first communication capabilities of the terminal device on a plurality of frequency bands included in the first frequency band combination is a weighted summation of the first communication capabilities of the terminal device over a plurality of frequency bands included in the first frequency band combination. For example, assuming that the first frequency band combination includes N frequency bands, respectively denoted as frequency band#1, frequency band 2,..., frequency band N, respectively, the sum of the first communication capabilities of the terminal device on the N frequency bands included in the first frequency band combination may be expressed as: first communication capability of the terminal device on frequency band#1× w₁+ first communication capability of the terminal device on frequency band#2× w₂+... + first communication capability of the terminal device on frequency band#N × wₙ. w₁ is a weight factor corresponding to frequency band#1, w₂ is a weight factor corresponding to frequency band#2, and wₙ is a weight factor corresponding to frequency band#N.

In some embodiments, the weight factors corresponding to different frequency bands may, for example, be related to numerologies corresponding to different frequency bands. The numerology may include, for example, but is not limited to, a subcarrier spacing and/or symbol length. As such, the sum of the first communication capabilities reported by the terminal device may be adapted to different numerologies.

According to the above technical solution, the terminal device does not need to report a first communication capability on each of the frequency band#1, the frequency band 2,..., and the frequency band N, thereby reducing the signaling overhead.

As an example, assuming that the first frequency band combination includes the frequency band#1 and the frequency band#2, and in this case, the communication capability information reported by the terminal device may include, for example, the sum (for example, denoted as X) of the first communication capabilities of the terminal device on the frequency band#1 and the frequency band#2.

In some embodiments, the first communication capability may have the following characteristics: the sum of the first communication capabilities of the terminal device on a plurality of different frequency bands is the first communication capability of the communication simultaneously performed by the terminal device on the plurality of different frequency bands. In other words, the first communication capability represents a communication capability, expressed in the sum manner, of all the frequency bands that can be flexibly combined. For example, the first communication capability may be a channel bandwidth, a channel bandwidth supported by the terminal device on the frequency band#1+ a channel bandwidth supported by the terminal device on the frequency band#2 is a channel bandwidth supported by communication simultaneously performed by the terminal device on the frequency band#1 and the frequency band#2.

It should be understood that the first communication capability in the embodiment may be, for example, any communication capability that conforms to the above-described characteristics, which is not limited in the embodiment of the present disclosure.

In some embodiments, if there are a plurality of communication capabilities that meet the above characteristics, the terminal device may carry, in the communication capability information, a sum of the plurality of communication capabilities.

For example, if both the capability A (one example of the first communication capability) and the capability B (another example of the first communication capability) satisfy the above characteristics, the terminal device may carry, in the reported communication capability information, the sum of the capabilities A of the terminal device on a plurality of frequency bands included in the first frequency band combination and the sum of the capabilities B of the terminal device on a plurality of frequency bands included in the first frequency band combination.

As an example, assuming that the first frequency band combination includes frequency band#1 and frequency band#2, in this case, the communication capability information reported by the terminal device may include, for example:
the sum (for example, denoted as X1) of the capabilities A of the terminal device on frequency band#1 and frequency band#2; and
the sum (for example, denoted as X2) of the capabilities B of the terminal device on frequency band#1 and frequency band#2.

In some embodiments, the communication capability information may include a common value of second communication capabilities of the terminal device on a plurality of frequency bands included in the first frequency band combination.

That is, if the second communication capabilities of the terminal device in the N (N is equal to or greater than 2) frequency bands included in the first frequency band combination have the same value, the terminal device may carry the value in the communication capability information and report the value. This value is a common value of the second communication capabilities of the terminal device on N frequency bands included in the first frequency band combination.

For example, assuming that the value of the second communication capability of the terminal device on the frequency band#1 in the first frequency band combination is Y and the value of the second communication capability on the frequency band#2 in the first frequency band combination is also Y, the terminal device may carry the value Y in the communication capability information, indicating that the value of the second communication capability of the terminal device on each of the frequency band#1 and the frequency band#2 is Y. In this way, the terminal device may not need to report the second communication capabilities of the terminal device on the frequency band#1 and the frequency band#2, respectively, thereby reducing the signaling overhead.

As an example, it is assumed that the first frequency band combination includes the frequency band#1 and the frequency band#2, and in this case, the communication capability information reported by the terminal device may include, for example, a common value (for example, denoted as Y) of the second communication capabilities of the terminal device on the frequency band#1 and the frequency band#2.

In some embodiments, the second communication capability represents a communication capability, expressed in a common value, of all the frequency bands that can be flexibly combined, such as the number of Multiple-Input Multiple-Output (MIMO) layers.

It should be understood that the second communication capability in the embodiment may be, for example, any communication capability that can be expressed in a common value, which is not limited in the embodiment of the present disclosure.

In some embodiments, if there are a plurality of communication capabilities that can be expressed in a common value, the terminal device may carry, in the communication capability information, a common value of each of the plurality of communication capabilities.

For example, since each of the capability C (an example of the second communication capability) and the capability D (another example of the second communication capability) can be expressed in a common value, the terminal device may carry, in the reported communication capability information, a common value of the capabilities C of the terminal device on a plurality of frequency bands included in the first frequency band combination and a common value of the capabilities D of the terminal device on a plurality of frequency bands included in the first frequency band combination.

As an example, assuming that the first frequency band combination includes frequency band#1 and frequency band#2, and in this case, the communication capability information reported by the terminal device may include, for example:
a common value (for example, denoted as Y1) of the capabilities C of the terminal device on frequency band#1 and frequency band#2; and
a common value (for example, denoted as Y2) of the capabilities D of the terminal device on frequency band#1 and frequency band#2.

In some embodiments, the communication capability information may simultaneously include the sum of the first communication capabilities of the terminal device on a plurality of frequency bands included in the first frequency band combination and a common value of the second communication capabilities of the terminal device on a plurality of frequency bands included in the first frequency band combination.

As an example, assuming that the first frequency band combination includes frequency band#1 and frequency band#2, and in this case, the communication capability information reported by the terminal device may include, for example:
the sum (for example, denoted as X) of the first communication capabilities of the terminal device on frequency band#1 and frequency band#2; and
a common value (for example, denoted as Y) of the second communication capabilities of the terminal device on the frequency band#1 and the frequency band#2.

In some embodiments, the communication capability information further includes one or more combinations of third communication capabilities of the terminal device on a plurality of frequency bands included in the first frequency band combination.

As an example, it is assumed that the first frequency band combination includes frequency band#1 and frequency band#2, and the communication capability information includes one combination of third communication capabilities of the terminal device on a plurality of frequency bands included in the first frequency band combination. In this case, the communication capability information reported by the terminal device may include, for example:
[Third communication capability P1 of the terminal device on frequency band#1, third communication capability P2 of the terminal device on frequency band#2].

This combination indicates that the third communication capability P1 of the terminal device on the frequency band#1 may be matched with the third communication capability P2 of the terminal device on the frequency band#2.

As another example, it is assumed that the first frequency band combination includes frequency band#1 and frequency band#2, and the communication capability information includes a plurality (for example, two) combinations of third communication capabilities of the terminal device on a plurality of frequency bands included in the first frequency band combination. In this case, the communication capability information reported by the terminal device may include, for example:
[Third communication capability P₁ of the terminal device on frequency band#1, third communication capability P₂ of terminal device on frequency band#2];
[Third communication capability Q₁ of the terminal device on frequency band#1, third communication capability Q₂ of terminal device on frequency band#2].

The above two combinations respectively indicate that the third communication capability P₁ of the terminal device on the frequency band#1 can be matched with the third communication capability P₂ of the terminal device on the frequency band#2; and the third communication capability Q₁ of the terminal device on the frequency band#1 may be paired with the communication capability Q₂ of the terminal device on the frequency band#2.

In some embodiments, the third communication capability information may be, for example, a communication capability that cannot be expressed in the common value and/or sum. It will be understood that due to the diversity of communication capabilities of terminal device, there may be a communication capability that cannot be expressed in the common value and/or sum. The reporting manner similar to the above-described manner for reporting the first communication capability cannot be used for reporting for the communication capability that cannot be expressed as the sum, and the reporting manner similar to the above-described manner for reporting the second communication capability cannot be used for reporting for the communication capability that cannot be expressed as a common value. In this case, for a plurality of frequency bands included in the first frequency band combination, the terminal device may report one or more combinations of third communication capabilities of the terminal device on the plurality of frequency bands.

In some embodiments, where the communication capability information includes a sum of the first communication capabilities of the terminal device on a plurality of frequency bands included in the first frequency band combination, the sum of the first communication capabilities may include a plurality of values of the sum of the first communication capabilities.

As an example, assuming that the first frequency band combination includes frequency band#1 and frequency band#2, and taking the sum of the first communication capabilities including two values of the sum of the first communication capabilities as an example, the communication capability information reported by the terminal device may include, for example:
a first value (for example, denoted as X) of the sum of the first communication capabilities of the terminal device on the frequency band#1 and the frequency band#2 and
a second value (denoted, for example, X') of the sum of the first communication capabilities of the terminal device on the frequency band#1 and the frequency band#2.

The above-mentioned reported communication capability information may indicate that, the sum of the first communication capabilities of the terminal device on the frequency band#1 and the frequency band#2 may be X in one possible case; and the sum of the first communication capabilities of the terminal device on the frequency band#1 and the frequency band#2 may be X' in another possible case.

In some embodiments, where the communication capability information includes one or more combinations of the third communication capabilities of the terminal device on a plurality of frequency bands included in the first frequency band combination, each combination of the third communication capabilities may correspond to one of a plurality of values (such as X and X') of the sum of the first communication capabilities.

As an example, it is assumed that the terminal device carries two combinations of the third communication capabilities in the reported communication capability information, which are:
Combination 1: [third communication capability P₁ of the terminal device on frequency band#1, third communication capability P₂ of the terminal device on frequency band#2]; and
Combination 2: [third communication capability Q₁ of the terminal device on frequency band#1, third communication capability Q₂ of the terminal device on frequency band#2].

In this case, combination 1 may for example correspond to X, and combination 2 may for example correspond to X'. Alternatively, combination 1 may, for example, correspond to X', and combination 2 may, for example, correspond to X.

Assuming that the combination 1 corresponds to for example X and the combination 2 corresponds to for example X', the content of the communication capability information reported by the terminal device may include, for example, the following two items 1) and 2).

Item 1) is [Third communication capability P₁ of the terminal device on frequency band#1, third communication capability P₂ of the terminal device on frequency band#2] and X.

The Item 1) indicates that the sum of the first communication capabilities of the terminal device in the frequency band#1 and the frequency band#2 is X for the combination [the third communication capability P₁ of the terminal device on the frequency band#1 and the third communication capability P₂ of the terminal device on the frequency band#2]. Taking the channel bandwidth as an example of the first communication capability, the item 1) indicates that the sum of the bandwidths which can be supported by the terminal device in the frequency band#1 and the frequency band#2 is X for the combination [the third communication capability P₁ of the terminal device on the frequency band#1 and the third communication capability P₂ of the terminal device on the frequency band#2].

Item 2) is [Third communication capability Q₁ of the terminal device on frequency band#1, third communication capability Q₂ of the terminal device on frequency band#2] and X'.

The Item 2) indicates that the sum of the first communication capabilities of the terminal device on the frequency band#1 and the frequency band#2 is X' for the combination [the third communication capability Q₁ of the terminal device on the frequency band#1 and the third communication capability Q₂ of the terminal device in the frequency band#2]. Taking the channel bandwidth as an example of the first communication capability, the item 2) indicates that the sum of the bandwidths which can be supported by the terminal device in the frequency band#1 and the frequency band#2 is X' for the combination [the third communication capability Q₁ of the terminal device on the frequency band#1 and the third communication capability Q₂ of the terminal device on the frequency band#2].

In some embodiments, when the communication capability information includes a common value of the second communication capabilities of the terminal device on a plurality of frequency bands included in the first frequency band combination, the common value of the second communication capabilities may include a plurality of values of the common value of the second communication capabilities.

As an example, assuming that the first frequency band combination includes frequency band#1 and frequency band#2, and taking two values of the common value of the second communication capabilities as an example, the communication capability information reported by the terminal device may include, for example:
a first value (for example, denoted as Y) of the common value of the second communication capabilities of the terminal device on the frequency band#1 and the frequency band#2; and
a second value (for example, denoted as Y') of the common value of the second communication capabilities of the terminal device on the frequency band#1 and the frequency band#2).

The above-mentioned reported communication capability information may indicate that, the common value of the second communication capabilities of the terminal device on the frequency band#1 and the frequency band#2 may be Y in one possible case; and the common value of the second communication capabilities of the terminal device on the frequency band#1 and the frequency band#2 may be Y' in another possible case.

In some embodiments, where the communication capability information includes one or more combinations of the third communication capabilities of the terminal device on a plurality of frequency bands included in the first frequency band combination, each combination of the third communication capabilities may correspond to one of a plurality of values (e.g., Y and Y') of the common value of the second communication capabilities.

As an example, it is assumed that the terminal device carries, in the reported communication capability information, two combinations of the third communication capability, which are:
Combination 1: [third communication capability P1 of the terminal device on frequency band#1, third communication capability P2 of the terminal device on frequency band#2]; and
Combination 2: [third communication capability Q1 of the terminal device on frequency band#1, third communication capability Q2 of the terminal device on frequency band#2].

In this case, combination 1 may correspond to for example Y, and combination 2 may correspond to for example Y'. Alternatively, combination 1 may correspond to for example Y', and combination 2 may correspond to for example Y.

Assuming that the combination 1 corresponds to Y and the combination 2 corresponds to Y', the content of the communication capability information reported by the terminal device may include, for example, the following two items 1) and 2).

Item 1) is [Third communication capability P₁ of the terminal device on frequency band#1, third communication capability P₂ of the terminal device on frequency band#2] and Y.

The Item 1) indicates that the common value of the second communication capabilities of the terminal device on the frequency band#1 and the frequency band#2 is Y for the combination [the third communication capability P₁ of the terminal device on the frequency band#1 and the third communication capability P₂ of the terminal device on the frequency band#2]. Taking the number of MIMO layers as an example of the second communication capability, the item 1) indicates that the number of MIMO layers which can be supported by the terminal device in each of the frequency band#1 and the frequency band#2 is Y for the combination [the third communication capability P₁ of the terminal device on the frequency band#1 and the third communication capability P₂ of the terminal device on the frequency band#2].

Item 2) is [Third communication capability Q₁ of the terminal device on frequency band#1, third communication capability Q₂ of the terminal device on frequency band#2] and Y'.

The Item 2) indicates that the common value of the second communication capabilities of the terminal device on the frequency band#1 and the frequency band#2 is Y' for the combination [the third communication capability Q₁ of the terminal device on the frequency band#1 and the third communication capability Q₂ of the terminal device on the frequency band#2]. Taking the number of MIMO layers as an example of the second communication capability, the item 1) indicates that the number of MIMO layers which can be supported by the terminal device in each of the frequency band#1 and the frequency band#2 is Y' for the combination [the third communication capability Q₁ of the terminal device on the frequency band#1 and the third communication capability Q₂ of the terminal device on the frequency band#2].

In some embodiments, the communication capability information includes a sum of the first communication capabilities of the terminal device on a plurality of frequency bands included in the first frequency band combination, and a common value of the second communication capabilities of the terminal device on a plurality of frequency bands included in the first frequency band combination. In this case, the sum of the first communication capabilities may include: a plurality of values of the sum of the first communication capabilities. The common value of the second communication capabilities may include a plurality of values of the common value of the second communication capabilities. Here, a plurality of values of the sum of the first communication capabilities and a plurality of values of the common value of the second communication capabilities may have a plurality of value combinations.

For example, assuming that the sum of the first communication capabilities includes two values (X and X ', respectively) of the sum of the first communication capabilities, and the common value of the second communication capabilities includes two values (Y and Y', respectively) of the common value of the second communication capabilities, there may be a variety of value combinations between X, X 'and Y, Y'.

For example, the following multiple value combinations may exist between X, X 'and Y, Y':
Value combination 1: [X Y], that is, X and Y as a value combination, indicate that X can be matched with Y;
Value combination 2: [X'Y '], that is, X' and Y as a value combination, indicate that X' can be matched with Y';
Value combination 3: [X'Y], that is, X 'and Y as a value combination, indicate that X' can be matched with Y;
Value combination 4: [X Y '], that is, X and Y' as a value combination, indicate that X can be matched with Y'.

In some embodiments, in a case where the communication capability information includes one or more combinations of the third communication capabilities of the terminal device on a plurality of frequency bands included in the first frequency band combination, each combination of the third communication capabilities corresponds to at least one (one or more) value combination of the above-described plurality of value combinations (consisting of a plurality of values of a sum of the first communication capabilities and a plurality of values of a common value of the second communication capabilities).

In one possible case, each combination of the third communication capabilities may correspond to one of the plurality of value combinations.

As an example, it is assumed that the terminal device carries, in the reported communication capability information, two combinations of the third communication capability, which are:
Combination 1: [third communication capability P₁ of the terminal device on frequency band#1, third communication capability P₂ of the terminal device on frequency band#2]; and
Combination 2: [third communication capability Q₁ of the terminal device on frequency band#1, third communication capability Q₂ of the terminal device on frequency band#2].

In this case, the combination 1 and the combination 2 may each correspond to one of the plurality of value combinations.

Assuming that the combination 1 corresponds to [XY] and the combination 2 corresponds to [X'Y'], the content of the communication capability information reported by the terminal device may include, for example, the following two items 1) and 2).

Item 1) is [Third communication capability P₁ of the terminal device on frequency band#1, third communication capability P₂ of the terminal device on frequency band#2], and [X Y].

This term indicates that the sum of the first communication capabilities of the terminal device on the frequency band#1 and the frequency band#2 is X and the common value of the second communication capabilities of the terminal device on the frequency band#1 and the frequency band#2 is Y for the combination [the third communication capability P₁ of the terminal device on the frequency band#1 and the third communication capability P₂ of the terminal device on the frequency band#2]. Taking the channel bandwidth as an example of the first communication capability and the number of MIMO layers as an example of the second communication capability, this term indicates that the sum of the bandwidths which can be supported the terminal device in the frequency band#1 and the frequency band#2 is X and the number of MIMO layers which can be supported the terminal device in each of the frequency band#1 and the frequency band#2 is Y for the combination [the third communication capability P₁ of the terminal device on the frequency band#1 and the third communication capability P₂ of the terminal device on the frequency band#2].

Item 2) is [third communication capability Q₁ of the terminal device on frequency band#1, third communication capability Q₂ of the terminal device on frequency band#2], and [X'Y'].

This term indicates that the sum of the first communication capabilities of the terminal device on the frequency band#1 and the frequency band#2 is X' and the common value of the second communication capabilities of the terminal device on the frequency band#1 and the frequency band#2 is Y' for the combination [the third communication capability Q₁ of the terminal device in the frequency band#1 and the third communication capability Q₂ of the terminal device in the frequency band#2]. Taking the channel bandwidth as an example of the first communication capability and the number of MIMO layers as an example of the second communication capability, this term indicates that the sum of the bandwidths which can be supported the terminal device in the frequency band#1 and the frequency band#2 is X' and the number of MIMO layers which can be supported the terminal device in each of the frequency band#1 and the frequency band#2 is Y' for the combination [the third communication capability P₁ of the terminal device on the frequency band#1 and the third communication capability P₂ of the terminal device on the frequency band#2].

In another possible case, each combination of the third communication capability may correspond to two or more value combinations among the plurality of value combinations described above.

As an example, it is assumed that the terminal device carries, in the reported communication capability information, two combinations of the third communication capability, which are:
Combination 1: [third communication capability P₁ of the terminal device on frequency band#1, third communication capability P₂ of the terminal device on frequency band#2];
Combination 2: [third communication capability Q₁ of the terminal device on frequency band#1, third communication capability Q₂ of the terminal device on frequency band#2].

In this case, the combination 1 may correspond to two or more value combinations among the plurality of value combinations described above, and the combination 2 may correspond to two or more value combinations among the plurality of value combinations described above.

Assuming that the combination 1 corresponds to [X Y] and [X 'Y'] and the combination 2 corresponds to [X Y] and [X' Y], the content of the communication capability information reported by the terminal device may include, for example, the following two items 1) and 2).

Item 1) is [third communication capability P₁ of the terminal device on frequency band#1, third communication capability P₂ of the terminal device on frequency band#2], and [X Y], [X' Y'].

This term indicates that for the combination [third communication capability P₁ of the terminal device on frequency band#1, third communication capability P₂ of the terminal device on frequency band#2], the sum of the first communication capabilities of the terminal device on frequency band#1 and frequency band#2 is X and the common value of the second communication capabilities of the terminal device on frequency band#1 and frequency band#2 is Y in some scenarios, and the sum of the first communication capabilities of the terminal device on frequency band#1 and frequency band#2 is X ' and the common value of the second communication capabilities of the terminal device on frequency band#1 and frequency band#2 is Y' in other scenarios.

Taking the channel bandwidth as an example of the first communication capability and the number of MIMO layers as an example of the second communication capability, this term indicates that for the combination [third communication capability P₁ of the terminal device on frequency band#1, third communication capability P₂ of the terminal device on frequency band#2], the sum of the bandwidths which can be supported by the terminal device on frequency band#1 and frequency band#2 is X and the number of MIMO layers which can be supported by the terminal device on frequency band#1 and frequency band#2 is Y in some scenarios, and the sum of the bandwidths which can be supported by the terminal device on frequency band#1 and frequency band#2 is X ' and the number of MIMO layers which can be supported by the terminal device on each of frequency band#1 and frequency band#2 is Y' in other scenarios.

Item 2) is [third communication capability Q₁ of the terminal device on frequency band#1, third communication capability Q₂ of the terminal device on frequency band#2], and [X Y], [X' Y].

This term indicates that for the combination [third communication capability Q₁ of the terminal device on frequency band#1, third communication capability Q₂ of the terminal device on frequency band#2], the sum of the first communication capabilities of the terminal device on frequency band#1 and frequency band#2 is X and the common value of the second communication capabilities of the terminal device on frequency band#1 and frequency band#2 is Y in some scenarios, and the sum of the first communication capabilities of the terminal device on frequency band#1 and frequency band#2 is X ' and the common value of the second communication capabilities of the terminal device on frequency band#1 and frequency band#2 is Y' in other scenarios.

Taking the channel bandwidth as an example of the first communication capability and the number of MIMO layers as an example of the second communication capability, this term indicates that for the combination [third communication capability Q₁ of the terminal device on frequency band#1, third communication capability Q₂ of the terminal device on frequency band#2], the sum of the bandwidths which can be supported by the terminal device on frequency band#1 and frequency band#2 is X and the number of MIMO layers which can be supported by the terminal device on frequency band#1 and frequency band#2 is Y in some scenarios, and the sum of the bandwidths which can be supported by the terminal device on frequency band#1 and frequency band#2 is X ' and the number of MIMO layers which can be supported by the terminal device on each of frequency band#1 and frequency band#2 is Y' in other scenarios.

In some embodiments, when the communication capability information includes a sum of the first communication capabilities of the terminal device on a plurality of frequency bands included in the first frequency band combination, the communication capability information may further include a range of the first communication capabilities of the terminal device on a plurality of frequency bands.

Here, the range of the first communication capabilities of the terminal device on the plurality of frequency bands may be expressed by, for example, a maximum value and a minimum value, that is, the terminal device may carry, in the communication capability information, the maximum value and the minimum value of the first communication capabilities of the terminal device on the plurality of frequency bands.

As an implementation, the range of the first communication capabilities of the terminal device on the plurality of frequency bands may include a range of the first communication capability of the terminal device on each of the plurality of frequency bands. For example, assuming that the first frequency band combination includes frequency band#1, frequency band#2, and frequency band#3, the communication capability information may carry, in addition to the sum of the first communication capabilities of the terminal device on the frequency band#1, the frequency band#2 and the frequency band#3, a range (such as a maximum value and a minimum value) of the first communication capability of the terminal device on the frequency band#1, a range of the first communication capability of the terminal device on the frequency band#2, and a range of the first communication capability of the terminal device on the frequency band#3.

As another implementation, if the ranges of the first communication capability of the terminal device on a part (for example, two or more frequency bands) of the plurality of frequency bands are the same, the terminal device may report the range of the first communication capability on the part of the frequency bands to save signaling overhead. For example, assuming that the first frequency band combination includes the frequency band#1, the frequency band#2 and the frequency band#3, and the range of the first communication capability of the terminal device in the frequency band#1 is the same as the range of the first communication capability on the frequency band#2, which is for example, referred to as the first range, and the range of the first communication capability of the terminal device on the frequency band#3 is different from the first range (the range of the first communication capability of the terminal device on the frequency band#3 is referred to, for example, as the second range). In this case, in addition to the sum of the first communication capabilities of the terminal device on the frequency band#1, the frequency band#2, and the frequency band#3, the communication capability information may further include the first range (for the frequency band#1 and the frequency band#2) and the second range.

According to the above technical solution, the communication capability information reported by the terminal device may carry the range of the first communication capabilities of the terminal device on the plurality of frequency bands, in addition to the sum of the first communication capabilities of the terminal device on the plurality of frequency bands included in the first frequency band combination. Thus, after receiving the communication capability information, the network device may configure parameters for communication of the terminal device on the plurality of frequency bands based on the sum of the first communication capabilities of the terminal device on the plurality of frequency bands included in the first frequency band combination and the range of the first communication capabilities of the terminal device on the plurality of frequency bands, so as to ensure that the values of the parameters of the terminal device on the respective frequency bands falls within the ranges of the first communication capabilities corresponding to the respective frequency bands. For example, for a frequency band in the first frequency band combination, the network device may perform the following operations: min (the maximum value X of the first communication capability of the terminal device on the frequency band), max (the minimum value X of the first communication capability of the terminal device on the frequency band), to obtain a parameter X for communication of the terminal on the frequency band.

In some embodiments, when the communication capability information includes a common value of the second communication capabilities of the terminal device on a plurality of frequency bands included in the first frequency band combination, the communication capability information may further include a range of the second communication capabilities of the terminal device on a plurality of frequency bands.

Here, the range of the second communication capabilities of the terminal device on the plurality of frequency bands may be expressed by, for example, a maximum value and a minimum value. That is, the terminal device may carry, in the communication capability information, the maximum value and the minimum value of the second communication capabilities of the terminal device on the plurality of frequency bands.

As an implementation, the range of the second communication capabilities of the terminal device on the plurality of frequency bands may include a range of the second communication capability of the terminal device over each of the plurality of frequency bands. For example, assuming that the first frequency band combination includes the frequency band#1, the frequency band#2, and the frequency band#3, the communication capability information may carry, in addition to the common value of the second communication capabilities of the terminal device on the frequency band#1, the frequency band#2, and the frequency band#3, a range (such as a maximum value and a minimum value) of the second communication capability of the terminal device on the frequency band#1, a range of the second communication capability of the terminal device on the frequency band#2, and a range of the second communication capability of the terminal device on the frequency band#3.

As another implementation, if the ranges of the second communication capability of the terminal device on a part (for example, two or more frequency bands) of the plurality of frequency bands are the same, the terminal device may report the range of the second communication capability on the part of the frequency bands to save signaling overhead. For example, assuming that the first frequency band combination includes the frequency band#1, the frequency band#2 and the frequency band#3, and the range of the second communication capability of the terminal device on the frequency band#1 is the same as the range of the second communication capability on the frequency band#2, which is for example, referred to as the third range, and the range of the second communication capability of the terminal device on the frequency band#3 is different from the third range (the range of the second communication capability of the terminal device on the frequency band#3 is referred to, for example, as the fourth range). In this case, in addition to the common value of the second communication capabilities of the terminal device on the frequency band#1, the frequency band#2, and the frequency band#3, the communication capability information may further include the third range (for the frequency band#1 and the frequency band#2) and the fourth range.

According to the above technical solution, the communication capability information reported by the terminal device may carry the range of the second communication capabilities of the terminal device on the plurality of frequency bands, in addition to the common value of the second communication capabilities of the terminal device on the plurality of frequency bands included in the first frequency band combination. Thus, after receiving the communication capability information, the network device may configure parameters for communication of the terminal device on the plurality of frequency bands based on the common value of the second communication capabilities of the terminal device on the plurality of frequency bands included in the first frequency band combination and the range of the second communication capabilities of the terminal device on the plurality of frequency bands, so as to ensure that the values of the parameters of the terminal device on the respective frequency bands falls within the ranges of the second communication capabilities corresponding to the respective frequency bands. For example, for a frequency band in the first frequency band combination, the network device may perform the following operations: min (the maximum value Y of the second communication capability of the terminal device on the frequency band), max (the minimum value Y of the second communication capability of the terminal device on the frequency band), to obtain a parameter Y for communication of the terminal on the frequency band.

In some embodiments, the terminal device is capable of simultaneously communicating on a plurality of frequency bands included in the first frequency band combination. That is, the method may be applicable to a scenario in which the terminal device simultaneously uses the aggregated frequency resources (for example, simultaneously uses a plurality of frequency bands included in the first frequency band combination).

In some embodiments, before the terminal device sends the communication capability information of the terminal device for the first frequency band combination to the network device, or before the network device receives the communication capability information for the first frequency band combination from the terminal device, the method may further include sending, by the network device, the indication information to the terminal device, and accordingly, receiving, by the terminal device, the indication information from the network device.

Exemplarily, the indication information may for example indicate to, the terminal device, one or more of the following a) to c).
a) Communication capability information of the terminal device is reported for at least one first frequency band, the at least one first frequency band including a frequency band in a first frequency band combination.
   That is, the network device may instruct the terminal device to report the communication capability information of the terminal device for at least one first frequency band, and upon receiving receives the indication information, if the at least one first frequency band includes a frequency band in the first frequency band combination, the terminal device may send (report) the communication capability information of the terminal device for the first frequency band combination to the network device in response to the indication information.
b) The sum of the first communication capabilities is carried in the communication capability information of the terminal device.
   That is, the network device may instruct the terminal device to report the sum of the first communication capabilities when reporting the communication capability information.
c) A common value of the second communication capabilities is carried in the communication capability information of the terminal device.

That is, the network device may instruct the terminal device to report the common value of the second communication capabilities when reporting the communication capability information.

The preferred embodiments of the present disclosure have been described in detail above with reference to the accompanying drawings, but the present disclosure is not limited to the specific details in the above embodiments, and a variety of simple modifications can be made to the technical solution of the present disclosure within the scope of the technical concept of the present disclosure, and these simple modifications all belong to the protection scope of the present disclosure. For example, various specific technical features described in the above embodiments can be combined in any suitable manner in case that there is no contradiction, and various possible combinations will not be further described in present disclosure in order to avoid unnecessary repetition. As another example, any combination of various embodiments of the present disclosure may be made, and as long as it does not depart from the idea of the present disclosure, it should also be regarded as the disclosed content of the present disclosure. For another example, on the premise that there is no conflict, various embodiments and/or the technical features in the embodiments described in the present disclosure can be arbitrarily combined with the prior art, and the technical solution obtained by the combination should also fall within the protection scope of the present disclosure.

It should also be understood that in the various method embodiments of the present disclosure, the size of the sequence numbers of the above-described processes does not mean the order of execution, and the execution order of each process should be determined by its function and internal logic, and should not constitute any limitation on the implementation process of the embodiments of the present disclosure. Further, in the embodiments of the present disclosure, the terms "downlink", "uplink", and "sidelink" indicate a transmission direction of a signal or data, "downlink" indicates that the transmission direction of the signal or data is a first direction transmitted from the station to the user equipment of the cell, "uplink" indicates that the transmission direction of the signal or data is a second direction transmitted from the user equipment of the cell to the station, and " sidelink" indicates that the transmission direction of the signal or data is a third direction transmitted from the user equipment 1 to the user equipment 2. For example, "downlink signal" means that the transmission direction of the signal is the first direction. In addition, in the embodiment of the present disclosure, the term "and/or" is merely an association relationship for describing associated objects, indicating that there may be three relationships. Specifically, A and/or B may represent three cases in which A is present alone, A and B are present at the same time, and B is present alone. In addition, the character "/" herein generally indicates that the associated objects before and after are in an "or" relationship.

Based on the aforementioned embodiments, an embodiment of the present disclosure provides an information transmission device.

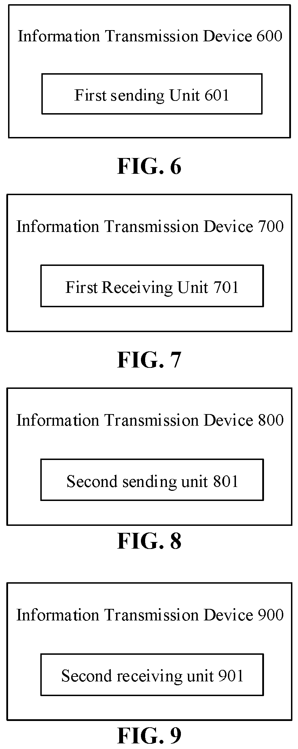

FIG. 6 is a schematic structural diagram 1 of a composition of an information transmission device provided by an embodiment of the present disclosure, which is applied to a terminal device. As shown in FIG. 6, the information transmission device 600 (hereinafter simply referred to as the device 600) includes a first sending unit 601.

The first sending unit 601 is configured to send communication capability information for the first frequency band combination of the device 600 to the network device. The communication capability information for the first frequency band combination includes: first communication capabilities on different frequency bands in the first frequency band combination; and/or second communication capabilities on different frequency bands in different frequency band subcombinations included in the first frequency band combination. The first communication capability for the frequency band of the device 600 is not related to a frequency band combination mode, and the second communication capability on the frequency band of the device 600 is related to the frequency band combination mode.

In some embodiments, the second communication capabilities on different frequency bands in the different frequency band subcombinations include: one or more combinations of the second communication capabilities of the device 600 on all the frequency bands in the first frequency band subcombination. The first frequency band subcombination is one of different frequency band subcombinations.

In some embodiments, the second communication capabilities on different frequency bands in different frequency band subcombinations includes: a sum of the second communication capabilities of the device 600 on all the frequency bands in the first frequency band subcombination. The first frequency band subcombination is one of different frequency band subcombinations.

In some embodiments, the sum of the second communication capabilities of the terminal device on the respective frequency bands in the first frequency band subcombination is a weighted sum of the second communication capabilities of the terminal device on the respective frequency bands in the first frequency band subcombination.

In some embodiments, the communication capability information for the first frequency band combination includes second communication capabilities on different frequency bands in the different frequency band subcombinations, the communication capability information further includes a range of the second communication capability of the device 600 on each frequency band in the first frequency band subcombination.

In some embodiments, the device 600 cannot simultaneously communicate on all frequency bands included in the first frequency band combination. The device 600 is capable of simultaneously communicating on a plurality of frequency bands included in a first frequency band subcombination, and the first frequency band subcombination is one of different frequency band subcombinations.

In some embodiments, the device 600 further includes a first receiving unit configured to receive indication information from the network device before the first sending unit 601 sends the communication capability information of the device 600 for the first frequency band combination to the network device. The indication information instructs the device 600 to report the communication capability information of the device 600 for at least one first frequency band. The at least one first frequency band includes a frequency band in the first frequency band combination.

FIG. 7 is a schematic structural diagram 2 of a composition of an information transmission device provided by an embodiment of the present disclosure, which is applied to a network device. As shown in FIG. 7, the information transmission device 700 (hereinafter simply referred to as the device 700) includes a first receiving unit 701.

The first receiving unit 701 is configured to receive communication capability information for a first frequency band combination from the terminal device. The communication capability information for the first frequency band combination includes: first communication capabilities on different frequency bands in the first frequency band combination; and/or second communication capabilities on different frequency bands in different frequency band subcombinations included in the first frequency band combination. The first communication capability on the frequency band of the terminal device is not related to a frequency band combination mode, and the second communication capability on the frequency band of the terminal device is related to the frequency band combination mode.

In some embodiments, the second communication capabilities on different frequency bands in different frequency band subcombinations include: one or more combinations of the second communication capabilities of the terminal device on respective frequency bands in the first frequency band subcombination. The first frequency band subcombination is one of different frequency band subcombinations.

In some embodiments, the second communication capabilities on different frequency bands in different frequency band subcombinations include: a sum of the second communication capabilities of the terminal device on respective frequency bands in the first frequency band subcombination. The first frequency band subcombination is one of different frequency band subcombinations.

In some embodiments, the sum of the second communication capabilities of the terminal device on the respective frequency bands in the first frequency band subcombination is a weighted sum of the second communication capabilities of the terminal device on the respective frequency bands in the first frequency band subcombination.

In some embodiments, in case that the communication capability information for the first frequency band combination includes second communication capabilities on different frequency bands in the different frequency band subcombinations, the communication capability information further includes a range of the second communication capability of the terminal device on each frequency band in the first frequency band subcombination.

In some embodiments, the terminal device cannot simultaneously communicate on all frequency bands included in the first frequency band combination, and the terminal device is capable of simultaneously communicating on a plurality of frequency bands included in the first frequency band subcombination, and the first frequency band subcombination is one of different frequency band subcombinations.

In some embodiments, the device 700 further includes a first sending unit configured to send, before the first receiving unit 701 receives the communication capability information for the first frequency band combination from the terminal device, indication information to the terminal device. The indication information instructs the terminal device to report the communication capability information of the terminal device on at least one first frequency band, and the at least one first frequency band includes a frequency band in the first frequency band combination.

FIG. 8 is a schematic structural diagram 3 of a composition of an information transmission device provided by an embodiment of the present disclosure, which is applied to a terminal device. As shown in FIG. 8, the information transmission device 800 (hereinafter simply referred to as the device 800) includes a second sending unit 801.

The second sending unit 801 is configured to send communication capability information for the first frequency band combination of the device 800 to the network device. The communication capability information includes a sum of the first communication capabilities of the device 800 on a plurality of frequency bands included in the first frequency band combination; and/or, a common value of second communication capabilities of the device 800 on a plurality of frequency bands included in the first frequency band combination.

In some embodiments, the communication capability information further includes one or more combinations of third communication capabilities of the device 800 on a plurality of frequency bands included in the first frequency band combination.

In some embodiments, the communication capability information includes: a sum of the first communication capabilities of the device 800 on a plurality of frequency bands included in the first frequency band combination. The sum of the first communication capabilities includes a plurality of values of the sum of the first communication capabilities.

In some embodiments, the communication capability information further includes: one or more combinations of third communication capabilities of the device 800 on a plurality of frequency bands included in the first frequency band combination. Each combination of the third communication capabilities corresponds to one of the plurality of values.

In some embodiments, the communication capability information includes: a common value of second communication capabilities of the device 800 on a plurality of frequency bands included in the first frequency band combination. The common value of the second communication capabilities includes a plurality of values of the common value of the second communication capabilities.

In some embodiments, the communication capability information further includes: one or more combinations of third communication capabilities of the device 800 on a plurality of frequency bands included in the first frequency band combination. Each combination of the third communication capabilities corresponds to one of the plurality of values.

In some embodiments, the communication capability information includes: a sum of the first communication capabilities of the device 800 on a plurality of frequency bands included in the first frequency band combination, and a common value of the second communication capabilities of the device 800 on a plurality of frequency bands included in the first frequency band combination. The sum of the first communication capabilities includes: a plurality of values of the sum of the first communication capabilities. The common value of the second communication capabilities includes: a plurality of values of the common value of the second communication capabilities. The plurality of values of the sum of the first communication capabilities and the plurality of values of the common value of the second communication capabilities have a plurality of value combinations.

In some embodiments, the communication capability information further includes: one or more combinations of third communication capabilities of the device 800 on a plurality of frequency bands included in the first frequency band combination. Each combination of the third communication capabilities corresponds to at least one of the plurality of value combinations.

In some embodiments, in case where the communication capability information includes a sum of the first communication capabilities of the device 800 on the plurality of frequency bands included in the first frequency band combination, the communication capability information further includes a range of the first communication capabilities of the device 800 on the plurality of frequency bands.

In some embodiments, in case where the communication capability information includes a common value of the second communication capabilities of the device 800 on the plurality of frequency bands included in the first frequency band combination, the communication capability information further includes a range of the second communication capabilities of the device 800 on the plurality of frequency bands.

In some embodiments, the device 800 is capable of communicating simultaneously over multiple frequency bands included in the first frequency band combination.

In some embodiments, the device 800 further includes a second receiving unit configured to receive indication information from the network device before the second sending unit 801 sends the communication capability information of the device 800 for the first frequency band combination to the network device. The indication information indicates to the device 800 one or more of: reporting the communication capability information of the device 800 for at least one first frequency band; carrying a sum of the first communication capabilities in the communication capability information of the device 800; and carrying a common value of the second communication capabilities in the communication capability information of the device 800. The at least one first frequency band includes a frequency band in the first frequency band combination.

In some embodiments, the sum of the first communication capabilities of the terminal device on the plurality of frequency bands included in the first frequency band combination is a weighted sum of the first communication capabilities of the terminal device on the plurality of frequency bands included in the first frequency band combination.

FIG. 9 is a schematic structural diagram 4 of a composition of an information transmission device provided by an embodiment of the present disclosure, which is applied to a network device. As shown in FIG. 9, the information transmission device 900 (hereinafter simply referred to as the device 900) includes a second receiving unit 901.

The second receiving unit 901 is configured to receive communication capability information for a first frequency band combination from a terminal device. The communication capability information includes a sum of the first communication capabilities of the terminal device on a plurality of frequency bands included in the first frequency band combination; and/or, a common value of second communication capabilities of the terminal device on a plurality of frequency bands included in the first frequency band combination.

In some embodiments, the communication capability information further includes one or more combinations of third communication capabilities of the terminal device on a plurality of frequency bands included in the first frequency band combination.

In some embodiments, the communication capability information includes: a sum of the first communication capabilities of the terminal device on a plurality of frequency bands included in the first frequency band combination. The sum of the first communication capabilities includes a plurality of values of the sum of the first communication capabilities.

In some embodiments, the communication capability information further includes: one or more combinations of third communication capabilities of the terminal device on a plurality of frequency bands included in the first frequency band combination. Each combination of the third communication capabilities corresponds to one of the plurality of values.

In some embodiments, the communication capability information includes: a common value of second communication capabilities of the terminal device on a plurality of frequency bands included in the first frequency band combination. The common value of the second communication capabilities includes a plurality of values of the common value of the second communication capabilities.

In some embodiments, the communication capability information further includes: one or more combinations of third communication capabilities of the terminal device on a plurality of frequency bands included in the first frequency band combination. Each combination of the third communication capabilities corresponds to one of the plurality of values.

In some embodiments, the communication capability information includes: a sum of the first communication capabilities of the terminal device on a plurality of frequency bands included in the first frequency band combination, and a common value of the second communication capabilities of the terminal device on a plurality of frequency bands included in the first frequency band combination. The sum of the first communication capabilities includes: a plurality of values of the sum of the first communication capabilities. The common value of the second communication capability includes: a plurality of values of the common value of the second communication capability. The plurality of values of the sum of the first communication capabilities and the plurality of values of the common value of the second communication capabilities have a plurality of value combinations.

In some embodiments, the communication capability information further includes: one or more combinations of third communication capabilities of the terminal device on a plurality of frequency bands included in the first frequency band combination. Each combination of the third communication capability corresponds to at least one of the plurality of value combinations.

In some embodiments, in case where the communication capability information includes a sum of the first communication capabilities of the terminal device on the plurality of frequency bands included in the first frequency band combination, the communication capability information further includes a range of the first communication capabilities of the terminal device on the plurality of frequency bands.

In some embodiments, in case where the communication capability information includes a common value of the second communication capabilities of the terminal device on the plurality of frequency bands included in the first frequency band combination, the communication capability information further includes a range of the second communication capabilities of the terminal device on the plurality of frequency bands.

In some embodiments, the terminal device is capable of simultaneously communicating on a plurality of frequency bands included in the first frequency band combination.

In some embodiments, the device 800 further includes: a second sending unit configured to send, before the second receiving unit 901 receives the communication capability information for the first frequency band combination from the terminal device, indication information to the terminal device. The indication information indicates to the terminal device one or more of: reporting the communication capability information of the terminal device for at least one first frequency band; carrying the sum of the first communication capabilities in the communication capability information of the terminal device; and carrying a common value of the second communication capabilities in the communication capability information of the terminal device. The at least one first frequency band includes a frequency band in the first frequency band combination.

In some embodiments, the sum of the first communication capabilities of the terminal device on the plurality of frequency bands included in the first frequency band combination is a weighted sum of the first communication capabilities of the terminal device on the plurality of frequency bands included in the first frequency band combination.

Those skilled in the art should understand that the relevant description of the above-described information transmission device according to the embodiment of the present disclosure can be understood with reference to the relevant description of the information transmission method according to the embodiment of the present disclosure.

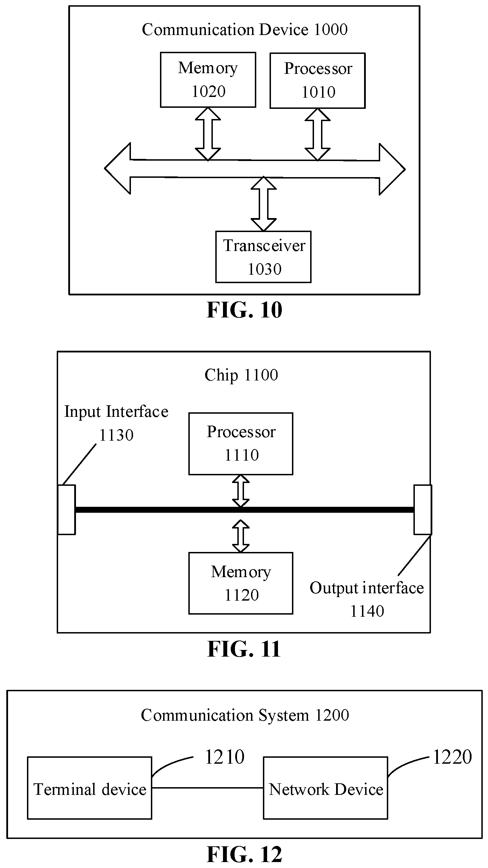

FIG. 10 is a schematic structural diagram of a communication device 1000 provided by an embodiment of the present disclosure. The communication device may be a terminal device or a network device. The communication device 1000 illustrated in FIG. 10 includes a processor 1010 that can call and execute a computer program from a memory to implement the method in the embodiment of the present disclosure.

Optionally, as shown in FIG. 10, the communication device 1000 may further include a memory 1020. Here, the processor 1010 may call and execute a computer program from the memory 1020 to implement the method in the embodiment of the present disclosure.

The memory 1020 may be a separate device independent of the processor 1010, or may be integrated in the processor 1010.

Optionally, as shown in FIG. 10, the communication device 1000 may further include a transceiver 1030, and the processor 1010 may control the transceiver 1030 to communicate with other devices, specifically, the processor 1010 may control the transceiver 1030 to transmit information or data to other devices or receive information or data sent by other devices.

Here, the transceiver 1030 may include a transmitter and a receiver. The transceiver 1030 may further include an antenna, and the number of antennas may be one or more.

Optionally, the communication device 1000 may be a network device according to the embodiment of the present disclosure, and the communication device 1000 may realize corresponding processes realized by the network device in each method of the embodiment of the present disclosure, which will not be described again here for simplicity.

Optionally, the communication device 1000 may be a terminal device according to the embodiment of the present disclosure, and the communication device 1000 may realize corresponding processes realized by the terminal device in each method of the embodiment of the present disclosure, which will not be described again here for simplicity.

FIG. 11 is a schematic structural diagram of a chip according to an embodiment of the present disclosure. The chip 1100 shown in FIG. 11 includes a processor 1110 that can call and execute a computer program from a memory to implement a method in an embodiment of the present disclosure.

Optionally, as shown in FIG. 11, the chip 1100 may further include a memory 1120. Here, the processor 1110 may call and execute a computer program from the memory 1120 to implement the method in the embodiment of the present disclosure.

The memory 1120 may be a separate device independent of the processor 1110, or may be integrated in the processor 1110.

Optionally, the chip 1100 may also include an input interface 1130. Here, the processor 1110 may control the input interface 1130 to communicate with other devices or chips, and specifically, the processor 1110 may control the input interface 1130 to acquire information or data sent by other devices or chips.

Optionally, the chip 1100 may also include an output interface 1140. The processor 1110 may control the output interface 1140 to communicate with other devices or chips, and specifically, the processor 1110 may control the output interface 1140 to output information or data to other devices or chips.

Optionally, the chip can be applied to the network device in the embodiment of the present disclosure, and the chip can realize the corresponding flow implemented by the network device in each method of the embodiment of the present disclosure, which will not be described again here for simplicity.

Optionally, the chip can be applied to the terminal device in the embodiment of the present disclosure, and the chip can realize the corresponding flow implemented by the terminal device in each method of the embodiment of the present disclosure, which will not be described again here for simplicity.

It should be understood that the chip mentioned in the embodiment of the present disclosure may also be referred to as a system-level chip, a system chip, a chip system, a system-on-chip chip, or the like.

The embodiments of the present disclosure further provide a computer storage medium having one or more programs stored thereon, and the one or more programs can be executed by one or more processors to implement the method in the embodiments of the present disclosure.

FIG. 12 is a schematic block diagram of a communication system 1200 provided by an embodiment of the present disclosure. As shown in FIG. 12, the communication system 1200 includes a terminal device 1210 and a network device 1220.

The terminal device 1210 may be used to realize the corresponding functions realized by the terminal device in the above-described method, and the network device 1220 may be used to realize the corresponding functions realized by the network device in the above-described method, which will not be described again here for simplicity.

It should be understood that the processor of the embodiment of the present disclosure may be an integrated circuit chip having signal processing capability. In the implementation process, the steps of the above-described method embodiments may be completed by the hardware integrated logic circuitry in the processor or instructions in the form of software. The above processor may be a general purpose Processor, a Digital Signal Processor (DSP), an Application Specific Integrated Circuit (ASIC), a Field Programmable Gate Array (FPGA) or other Programmable logic device, a discrete Gate or transistor logic device, or a discrete hardware component. The methods, steps, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly embodied as being executed by a hardware decoding processor, or may be executed by a combination of hardware and software modules in the decoding processor. The software module may be located in a storage medium mature in the art, such as a random access memory, a flash memory, a read-only memory, a programmable read-only memory, or an electrically erasable programmable memory, a register, etc. The storage medium is located in the memory, and the processor reads the information in the memory, and implements the steps of the method in combination with its hardware.

It will be understood that the memory in the embodiments of the present disclosure may be a volatile memory or a non-volatile memory, or may include both volatile and non-volatile memories. The non-volatile Memory may be a Read-Only Memory (ROM), a Programmable Read-Only Memory (PROM), an Erasable Programmable Read-Only Memory (EPROM), an Electrically Erasable Programmable Read-Only Memory (EEPROM), or a flash Memory. The volatile Memory may be a Random Access Memory (RAM), which serves as an external cache. By way of illustration, but not limitation, many forms of RAM are available, such as a Static Random Access Memory (SRAM), a Dynamic Random Access Memory (DRAM), a Synchronous Dynamic Random Access Memory (SDRAM), a Double Data Rate Synchronous Dynamic Random Access Memory (DDR SDRAM), an Enhanced Synchronous Dynamic Random Access Memory (ESDRAM), a Synchlink Dynamic Random Access Memory (SLDRAM), and a Direct Rambus RAM (DR RAM). It should be noted that the memory of the systems and methods described herein is intended to include, but is not limited to, these and any other suitable types of memory.

It should be understood that the above-described memory is exemplary but not restrictive, and for example, the memory in the embodiment of the present disclosure may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), a Direct Rambus RAM (DR RAM), and the like. That is, the memory in embodiments of the present disclosure is intended to include, but is not limited to, these and any other suitable types of memory.

The embodiments of the present disclosure further provide a computer-readable storage medium for storing a computer program.

Optionally, the computer-readable storage medium can be applied to the network device in the embodiment of the present disclosure, and the computer program causes the computer to execute corresponding processes implemented by the network device in each method of the embodiment of the present disclosure, which will not be described again here for simplicity.

Optionally, the computer-readable storage medium can be applied to the terminal device in the embodiment of the present disclosure, and the computer program causes the computer to execute corresponding processes implemented by the terminal device in each method of the embodiment of the present disclosure, which will not be described again here for simplicity.

The embodiments of the present disclosure also provide a computer program product including computer program instructions.

Optionally, the computer program product can be applied to the network device in the embodiment of the present disclosure, and the computer program instruction causes the computer to execute the corresponding flow implemented by the network device in each method of the embodiment of the present disclosure, which will not be described again here for simplicity.

Optionally, the computer program product can be applied to the terminal device in the embodiment of the present disclosure, and the computer program instruction causes the computer to execute the corresponding flow implemented by the terminal device in each method of the embodiment of the present disclosure, which will not be described again here for simplicity.

The embodiments of the present disclosure further provide a computer program.

Optionally, the computer program can be applied to the network device in the embodiment of the present disclosure, and the computer program, when run on the computer, causes the computer to execute the corresponding flow implemented by the network device in each method of the embodiment of the present disclosure, which will not be described again here for simplicity.

Optionally, the computer program can be applied to the terminal device in the embodiment of the present disclosure, and the computer program, when run on the computer, causes the computer to execute the corresponding flow implemented by the terminal device in each method of the embodiment of the present disclosure, which will not be described again here for simplicity.

Those of ordinary skill in the art will recognize that the elements and algorithm steps of the various examples described in connection with the embodiments disclosed herein can be implemented in electronic hardware, or a combination of computer software and electronic hardware. Whether these functions are performed in hardware or software depends on the specific application and design constraints of the technical solution. The skilled artisan may implement the described functionality using different methods for each particular application, but such implementation should not be considered beyond the scope of the present disclosure.

Those skilled in the art can clearly understand that for convenience and simplicity of the description, regarding the specific operation processes of the above-described systems, devices, and units, reference may be made to the corresponding processes in the above-described method embodiments, and repeated description is avoided here.

In the several embodiments provided herein, it should be understood that the disclosed systems, devices and methods may be implemented in other ways. For example, the device embodiments described above are merely illustrative. For example, the division of the units is merely a logical function division, and there may be other division methods in actual implementation. For example, multiple units or components may be combined or integrated into another system, or some features may be ignored or not implemented. Alternatively, the coupling or direct coupling or communication connection shown or discussed may be indirect coupling or communication connection through some interfaces, devices or units, may be in electrical, mechanical or other form.

The units described as separate components may be or may not be physically separated, and the components shown as units may be or may not be physical units, that is, may be located in one place, or may be distributed over multiple network units. Some or all of the units may be selected according to actual needs to achieve the purpose of the solution of the present embodiment.

In addition, various functional units in each embodiment of the present disclosure may be integrated in one processing unit, each unit may physically exist alone, or two or more units may be integrated in one unit.

The functions, if implemented in the form of software functional units and sold or used as stand-alone products, may be stored in a computer readable storage medium. Based on such an understanding, an essential part of the technical solution of the present disclosure or a part thereof contributing to the prior art or a part thereof may be embodied in the form of a software product, and the computer software product is stored in a storage medium which including several instructions for causing a computer device (which may be a personal computer, a server, or a network device, etc.) to perform all or part of the steps of the methods described in various embodiments of the present disclosure. The above storage medium includes various media capable of storing program codes, such as a USB flash drive, a mobile hard disk, a Read-Only Memory (ROM), a Random Access Memory (RAM), a magnetic disk, an optical disk, and the like.

The foregoing are only specific embodiments of the present disclosure, but the protection scope of the present disclosure is not limited thereto, and changes or substitutions easily conceived by the skilled person within the technical scope disclosed in the present disclosure all fall within the protection scope of the present disclosure. Therefore, the scope of protection of the present disclosure should conform with the scope of protection of the claims.

## Claims

1. An information transmission method applied to a terminal device, comprising:
sending communication capability information for a first frequency band combination of the terminal device to a network device, wherein the communication capability information for the first frequency band combination comprises at least one of:
first communication capabilities on different frequency bands in the first frequency band combination; or,
second communication capabilities on different frequency bands in different frequency band subcombinations, the different frequency band subcombinations being comprised in the first frequency band combination,
wherein the first communication capability of the terminal device on the frequency band is not related to a frequency band combination mode, and the second communication capability of the terminal device on the frequency band is related to the frequency band combination mode.

2. The method of claim 1, wherein the second communication capabilities on different frequency bands in different frequency band subcombinations comprise:
one or more combinations of second communication capabilities of the terminal device on respective frequency bands in a first frequency band subcombination, the first frequency band subcombination being one of the different frequency band subcombinations.

3. The method of claim 1, wherein the second communication capabilities on different frequency bands in the different frequency band subcombinations comprise:
a sum of the second communication capabilities of the terminal device on respective frequency bands in a first frequency band subcombination, the first frequency band subcombination is one of the different frequency band subcombinations.

4. The method of claim 3, wherein,
the sum of the second communication capabilities of the terminal device on respective frequency bands in the first frequency band subcombination is a weighted sum of the second communication capabilities of the terminal device on respective frequency bands in the first frequency band subcombination.

5. The method of claim 3 or 4, wherein,
in case where the communication capability information for the first frequency band combination comprises the second communication capabilities on different frequency bands in the different frequency band subcombinations, the communication capability information further comprises a range of the second communication capability of the terminal device on each frequency band in the first frequency band subcombination.

6. The method of any one of claims 1 to 5, wherein,
the terminal device is unable to simultaneously communicate on all frequency bands comprised in the first frequency band combination;
the terminal device is able to simultaneously communicate on a plurality of frequency bands comprised in a first frequency band subcombination, the first frequency band subcombination being one of the different frequency band subcombinations.

7. The method of any one of claims 1 to 6, further comprising: before the sending communication capability information for a first frequency band combination of the terminal device to a network device,
receiving indication information from the network device, wherein the indication information instructs the terminal device to report communication capability information of the terminal device for at least one first frequency band, and
the at least one first frequency band comprises a frequency band in the first frequency band combination.

8. An information transmission method applied to a network device, comprising:
receiving communication capability information for a first frequency band combination from a terminal device, wherein the communication capability information for the first frequency band combination comprises at least one of:
first communication capabilities on different frequency bands in the first frequency band combination; or,
second communication capabilities on different frequency bands in different frequency band subcombinations, the different frequency band subcombinations being comprised in the first frequency band combination,
wherein the first communication capability of the terminal device on the frequency band is not related to a frequency band combination mode, and the second communication capability of the terminal device on the frequency band is related to the frequency band combination mode.

9. The method of claim 8, wherein the second communication capabilities on different frequency bands in different frequency band subcombinations comprise:
one or more combinations of second communication capabilities of the terminal device on respective frequency bands in a first frequency band subcombination, the first frequency band subcombination is one of the different frequency band subcombinations.

10. The method of claim 8, wherein the second communication capabilities for different frequency bands in different frequency band subcombinations comprise:
a sum of the second communication capabilities of the terminal device on respective frequency bands in a first frequency band subcombination, the first frequency band subcombination is one of the different frequency band subcombinations.

11. The method of claim 10, wherein,
the sum of the second communication capabilities of the terminal device on respective frequency bands in the first frequency band subcombination is a weighted sum of the second communication capabilities of the terminal device on respective frequency bands in the first frequency band subcombination.

12. The method of claim 10 or 11, wherein,
in case where the communication capability information for the first frequency band combination comprises the second communication capabilities on different frequency bands in the different frequency band subcombinations, the communication capability information further comprises a range of the second communication capability of the terminal device on each frequency band in the first frequency band subcombination.

13. The method of any one of claims 8 to 12, wherein,
the terminal device is unable to simultaneously communicate on all frequency bands comprised in the first frequency band combination;
the terminal device is able to simultaneously communicate on a plurality of frequency bands comprised in a first frequency band subcombination, the first frequency band subcombination being one of the different frequency band subcombinations.

14. The method of any one of claims 8 to 13, further comprising: before the receiving communication capability information for a first frequency band combination from the terminal device,
sending, to the terminal device, indication information, wherein the indication information instructs the terminal device to report communication capability information of the terminal device for at least one first frequency band, and
the at least one first frequency band comprises a frequency band in the first frequency band combination.

15. An information transmission method applied to a terminal device, comprising:
sending, to a network device, communication capability information for a first frequency band combination of the terminal device, the communication capability information comprising at least one of:
a sum of first communication capabilities of the terminal device on a plurality of frequency bands comprised in the first frequency band combination; or,
a common value of second communication capabilities of the terminal device on the plurality of frequency bands comprised in the first frequency band combination.

16. The method of claim 15, wherein the communication capability information further comprises:
one or more combinations of third communication capabilities of the terminal device on the plurality of frequency bands comprised in the first frequency band combination.

17. The method of claim 15, wherein
the communication capability information comprises the sum of first communication capabilities of the terminal device on the plurality of frequency bands comprised in the first frequency band combination, and
the sum of the first communication capabilities comprises a plurality of values of the sum of the first communication capabilities.

18. The method of claim 17, wherein
the communication capability information further comprises one or more combinations of third communication capabilities of the terminal device on the plurality of frequency bands comprised in the first frequency band combination, and
each combination of the third communication capabilities corresponds to one of the plurality of values.

19. The method of claim 15, wherein
the communication capability information comprises the common value of second communication capabilities of the terminal device on a plurality of frequency bands comprised in the first frequency band combination, and
the common value of the second communication capabilities comprises a plurality of values of the common value of the second communication capabilities.

20. The method of claim 19, wherein
the communication capability information further comprises one or more combinations of third communication capabilities of the terminal device on a plurality of frequency bands comprised in the first frequency band combination, and
each combination of the third communication capabilities corresponds to one of the plurality of values.

21. The method of claim 15, wherein
the communication capability information comprises the sum of first communication capabilities of the terminal device on the plurality of frequency bands comprised in the first frequency band combination, and the common value of second communication capabilities of the terminal device on the plurality of frequency bands comprised in the first frequency band combination,
the sum of the first communication capabilities comprises: a plurality of values of the sum of the first communication capabilities,
the common value of the second communication capabilities comprises: a plurality of values of the common value of the second communication capabilities, and
there are a plurality of value combinations between the plurality of values of the sum of the first communication capabilities and the plurality of values of the common value of the second communication capabilities.

22. The method of claim 21, wherein
the communication capability information further comprises one or more combinations of third communication capabilities of the terminal device on the plurality of frequency bands comprised in the first frequency band combination, and
each combination of the third communication capabilities corresponds to at least one of the plurality of values combinations.

23. The method of any one of claims 15 to 22, wherein
in case that the communication capability information comprises the sum of the first communication capabilities of the terminal device on the plurality of frequency bands comprised in the first frequency band combination, the communication capability information further comprises ranges of the first communication capabilities of the terminal device on the plurality of frequency bands.

24. The method of any one of claims 15 to 23, wherein
in case that the communication capability information comprises a common value of second communication capabilities of the terminal device on the plurality of frequency bands comprised in the first frequency band combination, the communication capability information further comprises ranges of the second communication capabilities of the terminal device on the plurality of frequency bands.

25. The method of any one of claims 15 to 24, wherein
the terminal device is able to simultaneously communicate on the plurality of frequency bands comprised in the first frequency band combination.

26. The method of any one of claims 15 to 25, further comprising: before the sending communication capability information for the first frequency band combination of the terminal device to the network device,
receiving indication information from the network device, wherein the indication information indicates to the terminal device one or more of the following:
reporting communication capability information for at least one first frequency band of the terminal device;
carrying the sum of first communication capabilities in the communication capability information of the terminal device; and,
carrying the common value of second communication capabilities in the communication capability information of the terminal device,
wherein the at least one first frequency band comprises a frequency band in the first frequency band combination.

27. The method of any one of claims 15 to 26, wherein the sum of the first communication capabilities of the terminal device on the plurality of frequency bands comprised in the first frequency band combination is:
a weighted sum of the first communication capabilities of the terminal device on the plurality of frequency bands comprised in the first frequency band combination.

28. An information transmission method applied to a network device, comprising:
receiving communication capability information for a first frequency band combination from a terminal device, the communication capability information comprising at least one:
a sum of first communication capabilities of the terminal device on a plurality of frequency bands comprised in the first frequency band combination; or,
a common value of second communication capabilities of the terminal device on the plurality of frequency bands comprised in the first frequency band combination.

29. The method of claim 28, wherein the communication capability information comprises:
one or more combinations of third communication capabilities of the terminal device on the plurality of frequency bands comprised in the first frequency band combination.

30. The method of claim 28, wherein
the communication capability information comprises the sum of first communication capabilities of the terminal device on the plurality of frequency bands comprised in the first frequency band combination, and
the sum of the first communication capabilities comprises a plurality of values of the sum of the first communication capabilities.

31. The method of claim 30, wherein
the communication capability information further comprises one or more combinations of third communication capabilities of the terminal device on the plurality of frequency bands comprised in the first frequency band combination, and
each combination of the third communication capabilities corresponds to one of the plurality of values.

32. The method of claim 28, wherein
the communication capability information comprises the common value of second communication capabilities of the terminal device on a plurality of frequency bands comprised in the first frequency band combination, and
the common value of the second communication capabilities comprises a plurality of values of the common value of the second communication capabilities.

33. The method of claim 32, wherein
the communication capability information further comprises one or more combinations of third communication capabilities of the terminal device on a plurality of frequency bands comprised in the first frequency band combination, and
each combination of the third communication capabilities corresponds to one of the plurality of values.

34. The method of claim 28, wherein
the communication capability information comprises the sum of first communication capabilities of the terminal device on the plurality of frequency bands comprised in the first frequency band combination, and the common value of second communication capabilities of the terminal device on the plurality of frequency bands comprised in the first frequency band combination,
the sum of the first communication capabilities comprises a plurality of values of the sum of the first communication capabilities,
the common value of the second communication capabilities comprises a plurality of values of the common value of the second communication capabilities, and
there are a plurality of value combinations between the plurality of values of the sum of the first communication capabilities and the plurality of values of the common value of the second communication capabilities.

35. The method of claim 34, wherein
the communication capability information further comprises one or more combinations of third communication capabilities of the terminal device on the plurality of frequency bands comprised in the first frequency band combination, and
each combination of the third communication capabilities corresponds to at least one of the plurality of values combinations.

36. The method of any one of claims 28 to 35, wherein
in case that the communication capability information comprises the sum of the first communication capabilities of the terminal device on the plurality of frequency bands comprised in the first frequency band combination, the communication capability information further comprises ranges of the first communication capabilities of the terminal device on the plurality of frequency bands.

37. The method of any one of claims 28 to 36, wherein
in case that the communication capability information comprises a common value of second communication capabilities of the terminal device on the plurality of frequency bands comprised in the first frequency band combination, the communication capability information further comprises ranges of the second communication capabilities of the terminal device on the plurality of frequency bands.

38. The method of any one of claims 28 to 37, wherein
the terminal device is able to simultaneously communicate on the plurality of frequency bands comprised in the first frequency band combination.

39. The method of any one of claims 28 to 38, further comprising: before the receiving communication capability information for a first frequency band combination from the terminal device,
sending indication information to the terminal device, wherein the indication information indicates to the terminal device one or more of the following:
reporting communication capability information for at least one first frequency band of the terminal device;
carrying the sum of first communication capabilities in the communication capability information of the terminal device; and,
carrying the common value of second communication capabilities in the communication capability information of the terminal device,
wherein the at least one first frequency band comprises a frequency band in the first frequency band combination.

40. The method of any one of claims 28 to 39, wherein the sum of the first communication capabilities of the terminal device on the plurality of frequency bands comprised in the first frequency band combination is:
a weighted sum of the first communication capabilities of the terminal device on the plurality of frequency bands comprised in the first frequency band combination.

41. An information transmission device, comprising:
a first sending unit configured to send, to a network device, communication capability information for a first frequency band combination of the device, wherein the communication capability information for the first frequency band combination comprises at least one of:
first communication capabilities on different frequency bands in the first frequency band combination; or,
second communication capabilities on different frequency bands in different frequency band subcombinations, the different frequency band subcombinations being comprised in the first frequency band combination,
wherein the first communication capability of the device on the frequency band is not related to a frequency band combination mode, and the second communication capability of the device on the frequency band is related to the frequency band combination mode.

42. An information transmission device, comprising:
a first receiving unit configured to receive communication capability information for a first frequency band combination from a terminal device, wherein the communication capability information for the first frequency band combination comprises at least one of:
first communication capabilities on different frequency bands in the first frequency band combination; or,
second communication capabilities on different frequency bands in different frequency band subcombinations, the different frequency band subcombinations being comprised in the first frequency band combination,
wherein the first communication capability of the terminal device on the frequency band is not related to a frequency band combination mode, and the second communication capability of the terminal device on the frequency band is related to the frequency band combination mode.

43. An information transmission device, comprising:
a second sending unit configured to send, to a network device, communication capability information for a first frequency band combination of the device, the communication capability information comprising at least one of:
a sum of first communication capabilities of the device on a plurality of frequency bands comprised in the first frequency band combination; or,
a common value of second communication capabilities of the device on the plurality of frequency bands comprised in the first frequency band combination.

44. An information transmission device, comprising:
a second receiving unit configured to receive communication capability information for a first frequency band combination from a terminal device, the communication capability information comprising at least one of:
a sum of first communication capabilities of the terminal device on a plurality of frequency bands comprised in the first frequency band combination; or,
a common value of second communication capabilities of the terminal device on the plurality of frequency bands comprised in the first frequency band combination.

45. A communication device, comprising:
a memory for storing a computer program;
a processor connected to the memory for invoking and executing the computer program from the memory to implement the method of any one of claims 1 to 7, or the method of any one of claims 8 to 14, or the method of any one of claims 15 to 27, or the method of any one of claims 28 to 40; and
a transceiver for receiving and sending signals in a process of receiving and sending information with other devices.

46. A chip comprising:
a processor for invoking and executing a computer program from a memory, to enable the device on which the chip is mounted to perform the method of any one of claims 1 to 7, or the method of any one of claims 8 to 14, or the method of any one of claims 15 to 27, or the method of any one of claims 28 to 40; and
a transceiver for receiving and sending signals in a process of receiving and sending information with the device or the chip.

47. A computer-readable storage medium having a computer program stored thereon, wherein the computer program causes a computer to perform the method of any one of claims 1 to 7, or the method of any one of claims 8 to 14, or the method of any one of claims 15 to 27, or the method of any one of claims 28 to 40.

48. A computer program product comprising computer program instructions that cause a computer to perform the method of any one of claims 1 to 8, or the method of any one of claims 8 to 14, or the method of any one of claims 15 to 27, or the method of any one of claims 28 to 40.

49. A computer program that causes a computer to perform the method of any one of claims 1 to 7, or the method of any one of claims 8 to 14, or the method of any one of claims 15 to 27, or the method of any one of claims 28 to 40.
